# EUROPEAN PATENT SPECIFICATION

(11) **EP 1 170 475 B1**
(45) Date of publication and mention of the grant of the patent: **11.04.2007**
(21) Application number: 01116340.9
(22) Date of filing: 05.07.2001
(51) Int. Cl.: F01P 5/02, F01P 5/10, F02B 61/02, F01P 1/06, F16H 57/04

(54) **Motorcycle, especially scooter type motorcycle**
Motorrad, inbesondere Scooter
Motocyclette, notamment scooter

(30) Priority: 05.07.2000 JP 2000203283; 05.07.2000 JP 2000203288
(43) Date of publication of application: 09.01.2002
(73) Proprietor: YAMAHA HATSUDOKI KABUSHIKI KAISHA, Iwata-shi, Shizuoka-ken (JP)
(72) Inventor: Shiraoya, Takehiko, Iwata-shi, Shizuoka-ken (JP)
(74) Representative: Grünecker, Kinkeldey, Stockmair & Schwanhäusser Anwaltssozietät

(56) References cited:
- EP-A- 0 751 288
- EP-A- 0 756 110
- JP-A- 10 141 054
- US-A- 5 183 130
- PATENT ABSTRACTS OF JAPAN vol. 0060, no. 61 (M-123), 20 April 1982 (1982-04-20) & JP 57 002417 A (YAMAHA MOTOR CO LTD), 7 January 1982 (1982-01-07)
- PATENT ABSTRACTS OF JAPAN vol. 1997, no. 05, 30 May 1997 (1997-05-30) & JP 9 011959 A (YAMAHA MOTOR CO LTD), 14 January 1997 (1997-01-14)
- PATENT ABSTRACTS OF JAPAN vol. 2000, no. 07, 29 September 2000 (2000-09-29) & JP 2000 120847 A (SUZUKI MOTOR CORP), 28 April 2000 (2000-04-28)
- PATENT ABSTRACTS OF JAPAN vol. 1997, no. 05, 30 May 1997 (1997-05-30) & JP 9 011967 A (YAMAHA MOTOR CO LTD), 14 January 1997 (1997-01-14)

## Description

The present invention relates to a motorcycle according to the preamble portion of claim 1.

A cooling water circulation system for an engine for scooter type of motorcycles is adapted to circulate cooling water between a radiator and parts to be cooled by the use of a cooling water pump.

The cooling water circulation system for motorcycle engines is constituted to circulate cooling water between a radiator and parts to be cooled by the use of a cooling water pump. In that case, it is a common practice to place the cooling water pump on the right or left side of the crankcase.

When the above-mentioned cooling water circulation system is to be employed in the engine for scooter type of motorcycles, the layout structure of the cooling water pump must be adapted to the peculiar structure of the engine.

Furthermore, some motorcycle engines are provided with a V-belt type of CVT, with the CVT comprising a belt case located on a side portion of the crankcase in which are disposed a drive pulley, a driven pulley, and a V-belt. With such a CVT, it is a common practice to provide a cooling system inside the belt case to prevent the V-belt in the belt case from overheating.

There has been a conventional cooling system in which blower vanes are formed on a pulley in the belt case to draw external air through the air cleaner and cool the V-belt.

However, in the motorcycle engine with the V-belt type of CVT, difficulty in securing room for placing the external air cleaner is a problem, and difficulty in securing sufficient filtering area due to the location of the element in the vicinity of the cooling air inlet of the belt case is another problem.

From JP-10-141054 A there is known a scooter-type motorcycle, in which a transmission case is provided on a first side of the vehicle body frame, and in which an exhaust muffler is arranged on the respectively opposite side of the vehicle body frame in the width direction. Hot exhaust gases flowing through the exhaust gas muffler are cooled by heat exchange with the environment via the muffler.

Further, from US 5,183,130 there is known a motorcycle having a muffler in which the muffler body is forcibly cooled by air in order to allow the muffler body to be located inside a cowl of the motorcycle. As the muffler is cooled down, the hot exhaust gases flowing therethrough are cooled down, too. Therein, the cooled muffler and the transmission are arranged on opposite sides of the vehicle bod frame.

It is an objective of the present invention to provide a motorcycle as indicated above, especially a scooter type motorcycle, with an engine and a transmission having a compact structure.

According to the present invention said objective is solved by a motorcycle having the features of claim 1.

Preferred embodiments of the present invention are laid down in the dependent claims 2 to 9.

In the following, the present invention is explained in greater detail with respect to several embodiments thereof in conjunction with the accompanying drawings, wherein:
- FIG. 1: is a plan view of an engine of an embodiment described above;
- FIG. 2: is a side view of the same engine;
- FIG. 3: is an elevation as seen from the head cover side of the same engine;
- FIG. 4: shows the section IV-IV in FIG. 3;
- FIG. 5: shows the section V-V in FIG. 3;
- FIG. 6: is an elevation of the same engine with the head cover removed;
- FIG. 7: shows the section VII-VII in FIG. 6;
- FIG. 8: is a sectional plan view of the crankshaft portion of the same engine;
- FIG. 9: is an enlarged view of the crankshaft right end portion;
- FIG. 10: is a cross-sectional plan view of a V-belt type of CVT of the same engine;

- FIG. 11: is a side view of the V-belt type of CVT;
- FIG. 12: is a sectional rear view of the driven pulley portion of the V-belt type of CVT;
- FIG. 13: is a sectional plan view of the clutch mechanism portion of the same engine;
- FIG. 14: is a right side view of the crankcase portion of the same engine;
- FIG. 15: is a left side view of the same engine with the left case cover removed;
- FIG. 16: shows the sections XIVa-XIVa, XIVb-XIVb, and XIVc-XIVc in FIG. 15;
- FIG. 17: is a side view as seen from inside of the left cover of the same engine;
- FIG. 18: shows the section XVIII-XVIII in FIG. 14;
- FIG. 19: shows the section XIX-XIX in FIG. 14;
- FIG. 20: is a left side view of the right case of the same engine;
- FIG. 21: is a left side view of the transmission case of the same engine;
- FIG. 22: shows the section IIXII-IIXII in FIG. 21;
- FIG. 23: shows the section IIXIII-IIXIII in FIG. 21;
- FIG. 24: is a side view as seen from inside of the inside case of the transmission case;
- FIG. 25: is a side view as seen from inside of the outside case of the transmission case;
- FIG. 26: is a side view of the cooling water system of the same engine;
- FIG. 27: is a plan view of the above cooling water system;
- FIG. 28: is a simplified conceptual elevation of the radiator of the above cooling water system;
- FIG. 29: is a side view of routing of the intake pipe and the secondary air supply pipe of the same engine;
- FIG. 30: is a simplified conceptual plan view of the intake system of the same engine;
- FIG. 31: shows the section IIIXI-IIIXI in FIG. 32; and
- FIG. 32: is a left side view of a scooter type of two-wheeled vehicle with the same engine mounted.

An embodiment is described below in reference to the appended drawings.

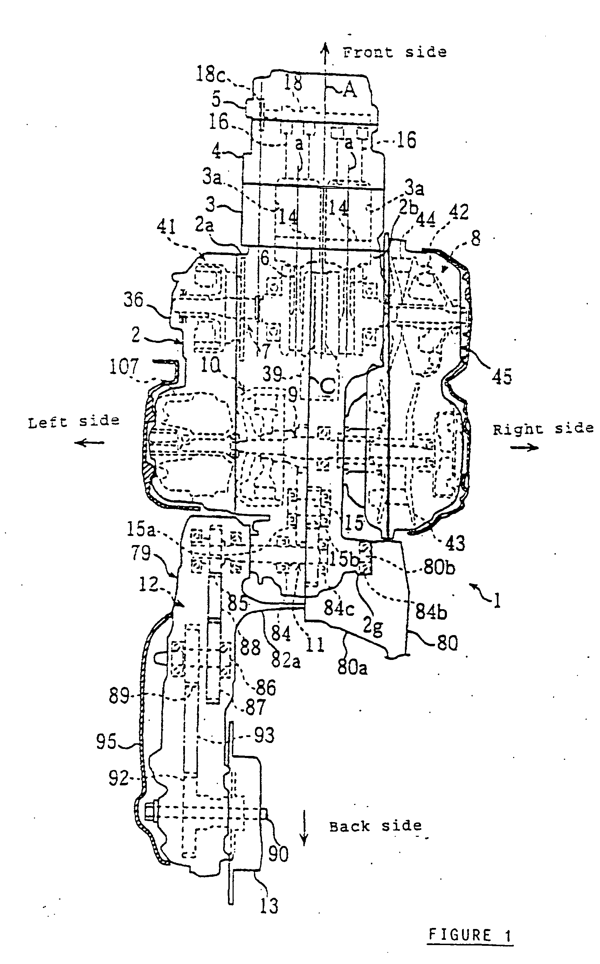

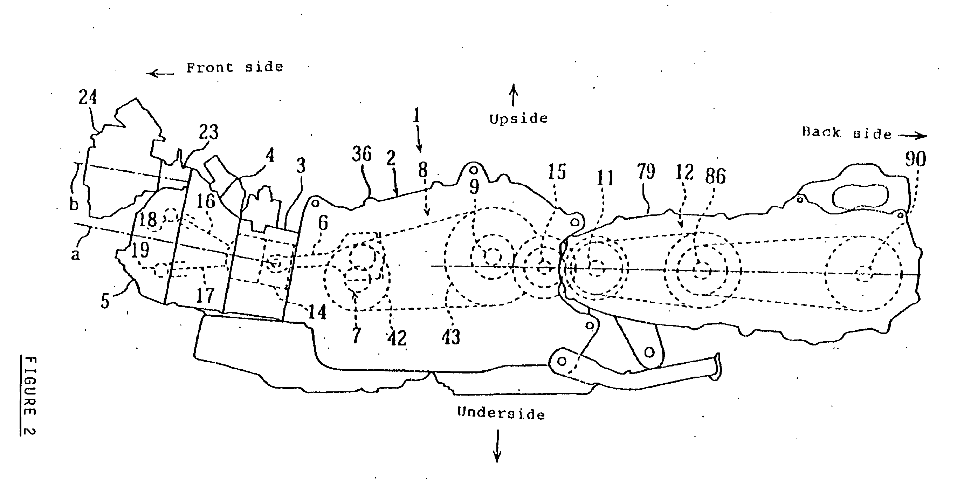

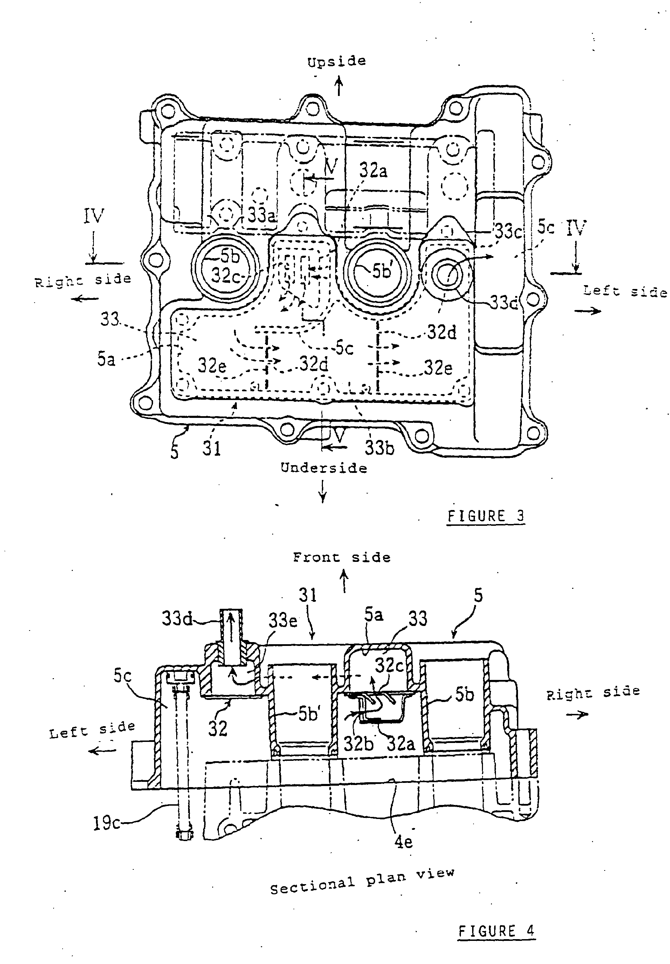

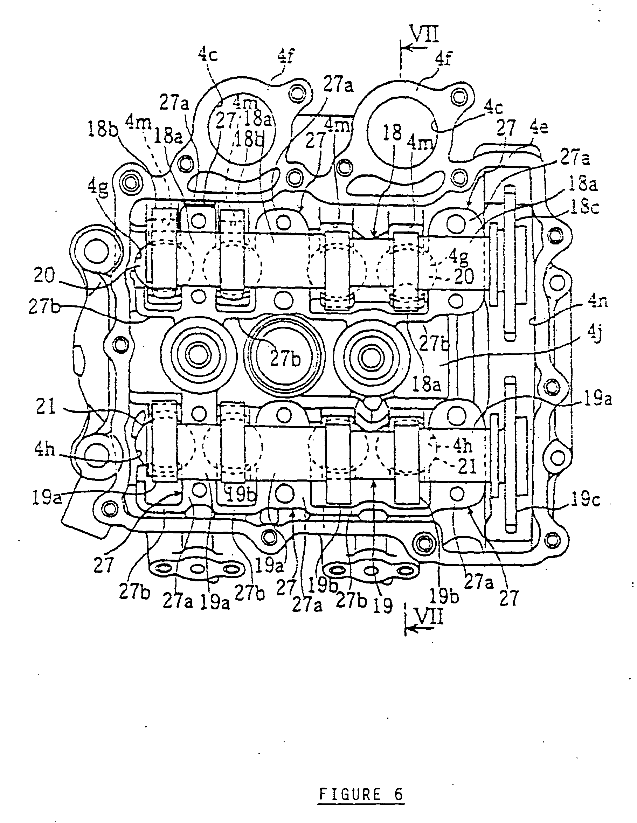

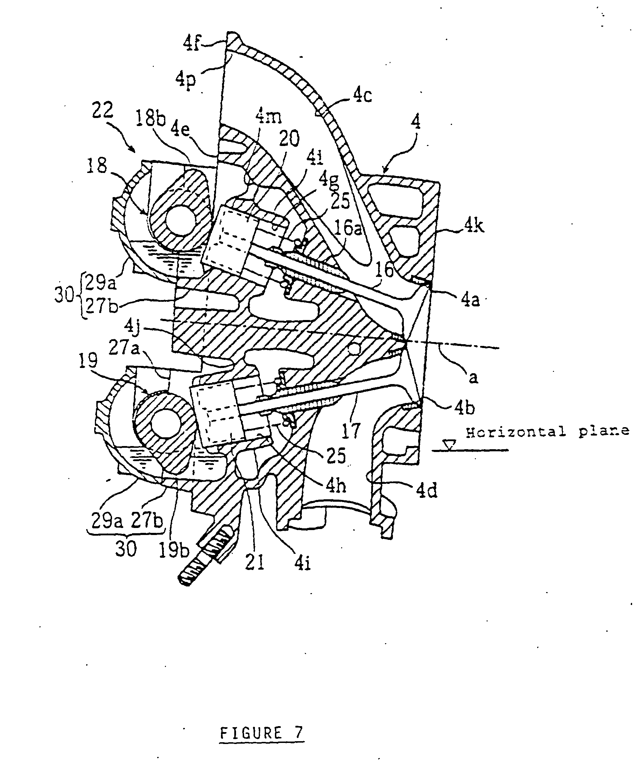

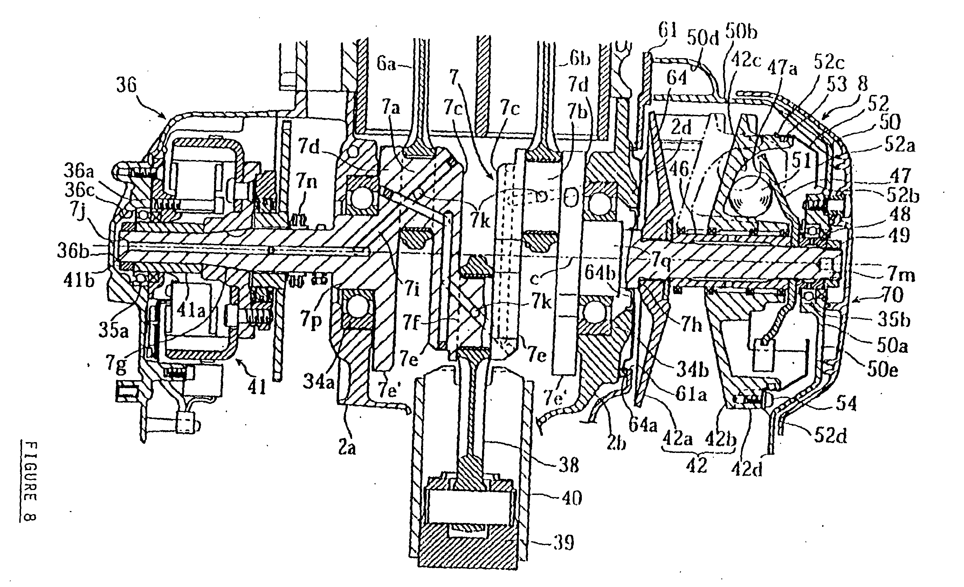

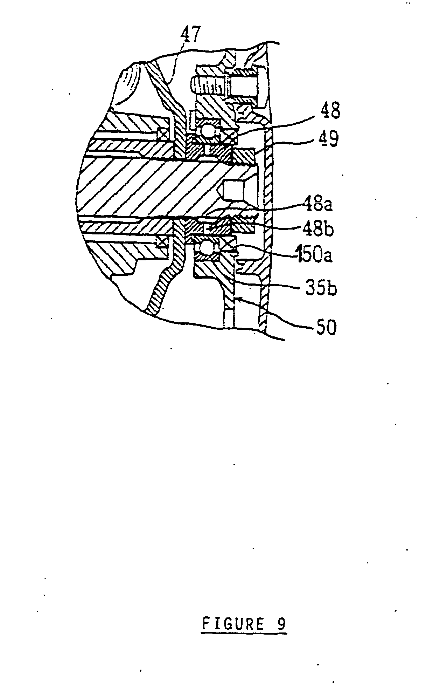

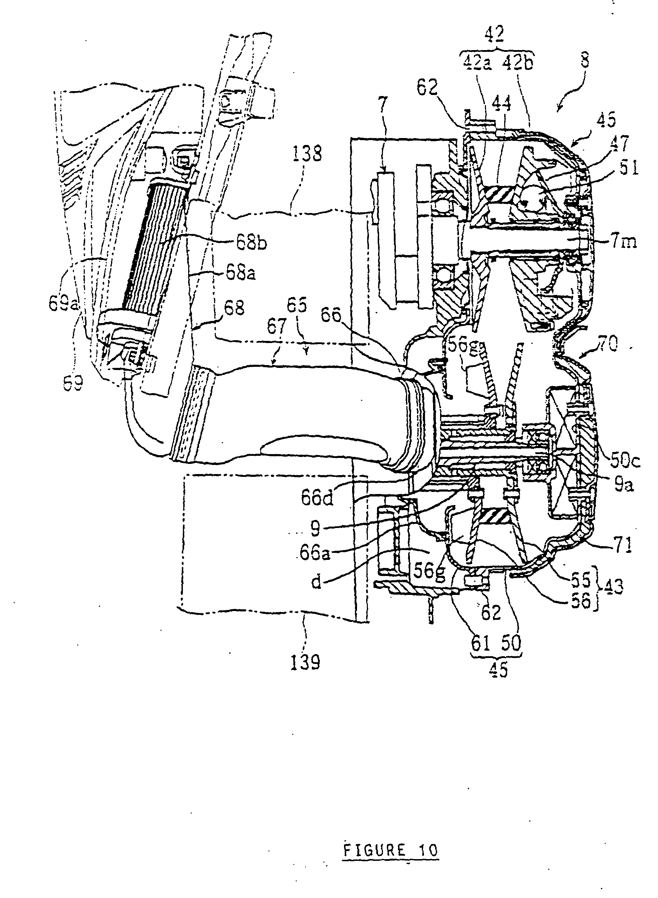

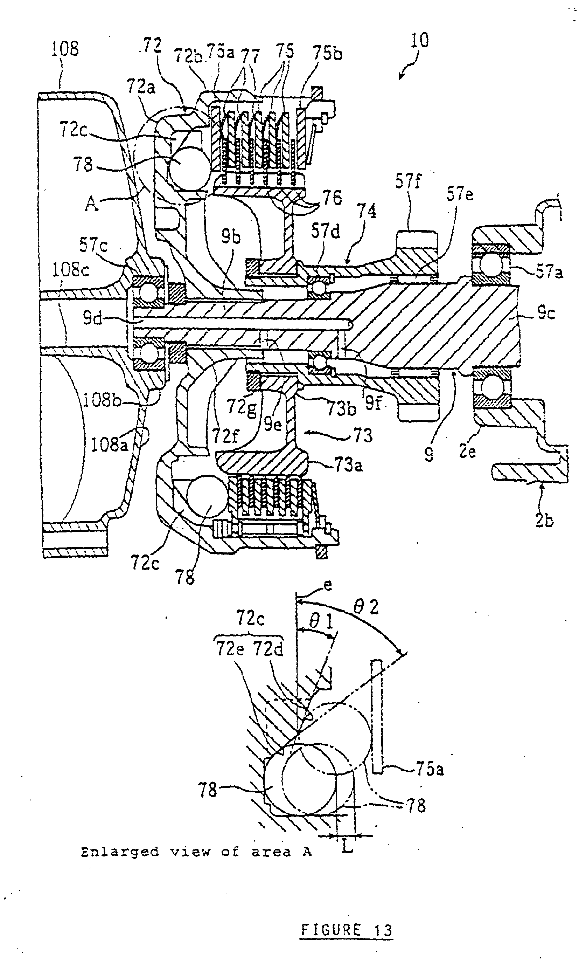

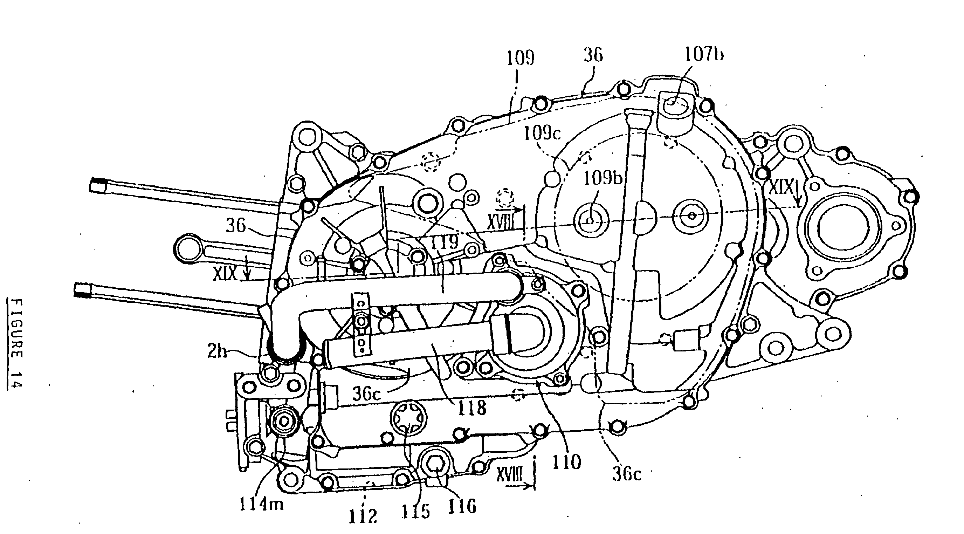

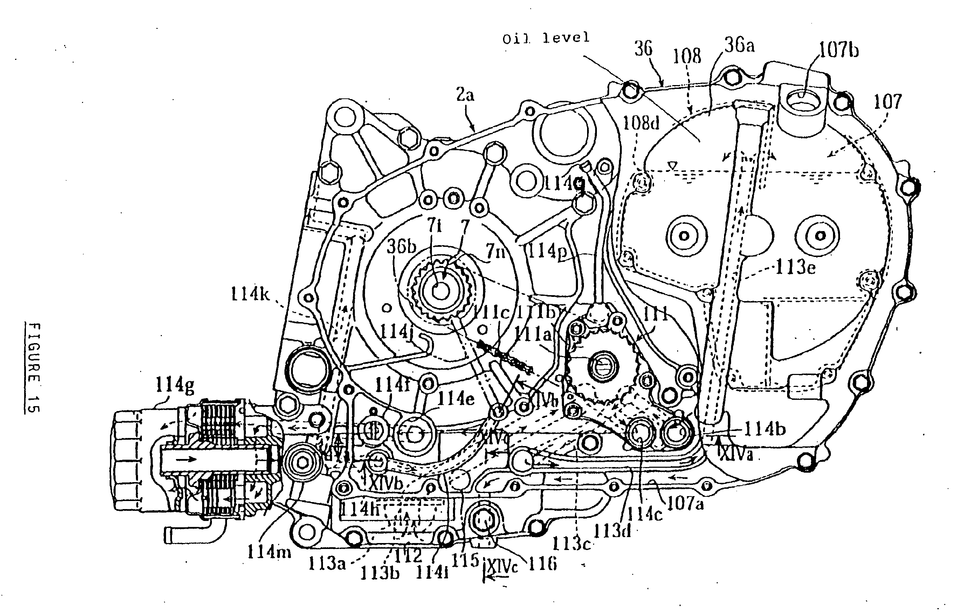

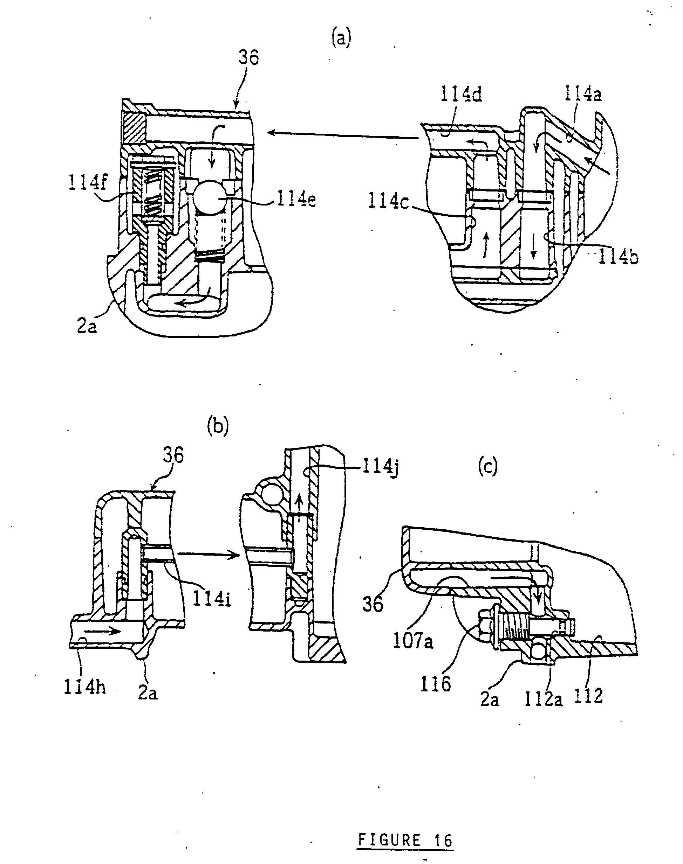

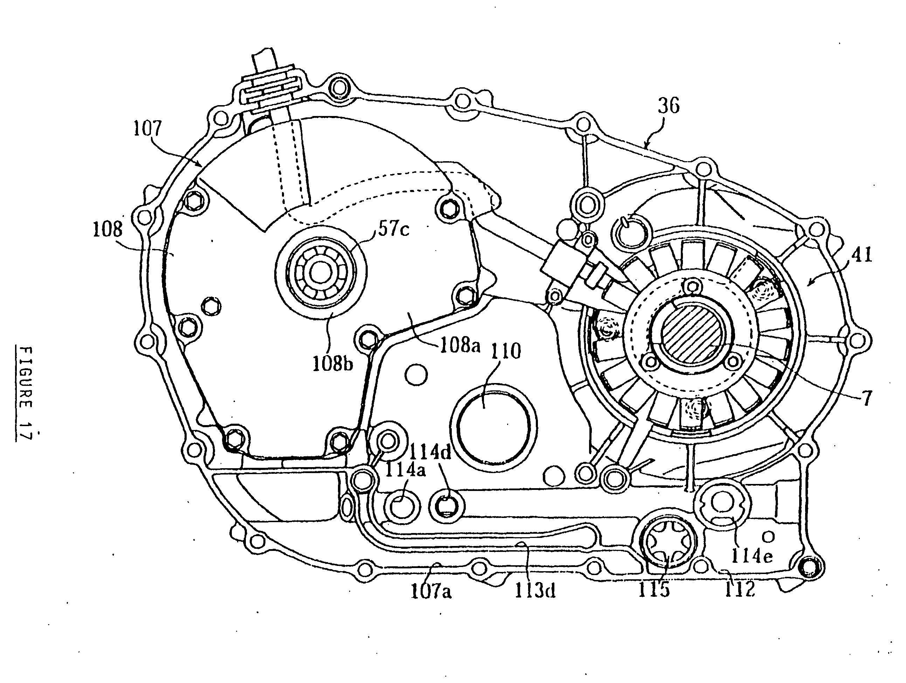

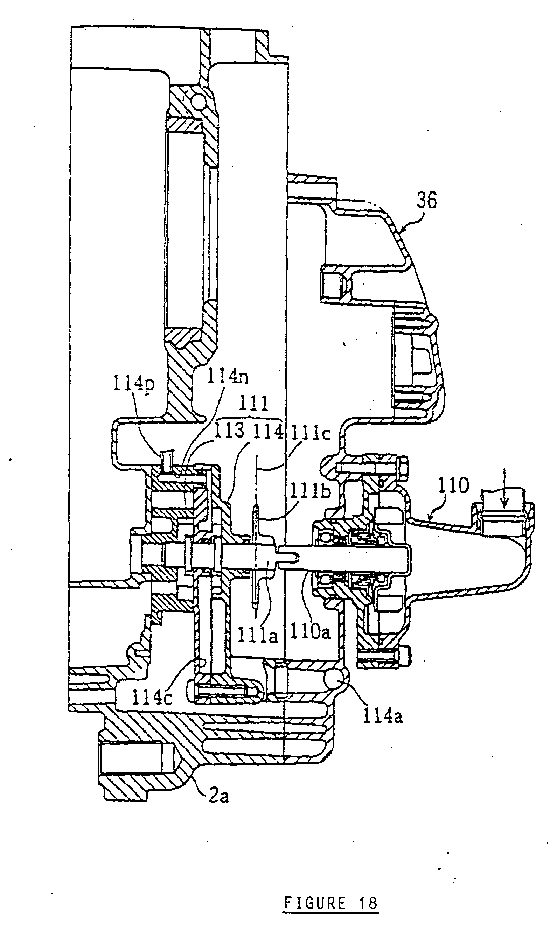

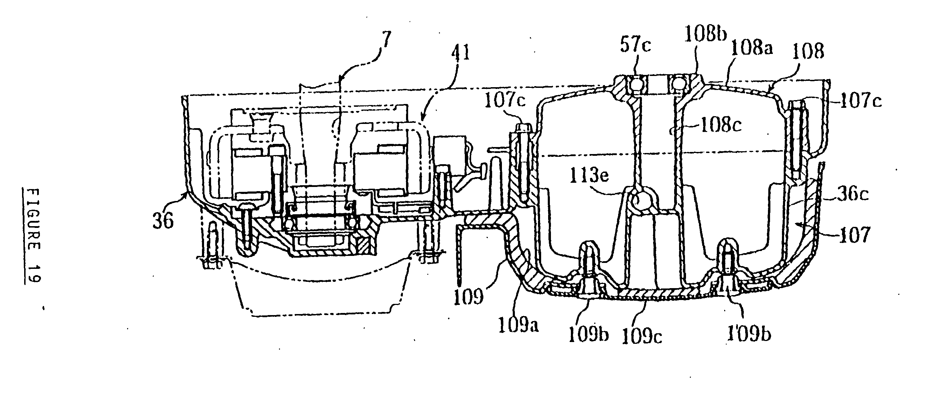

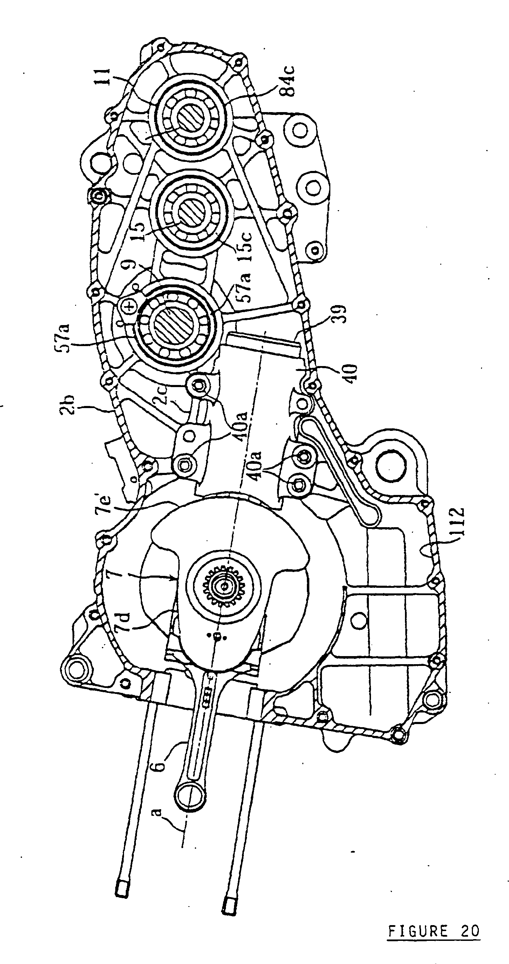

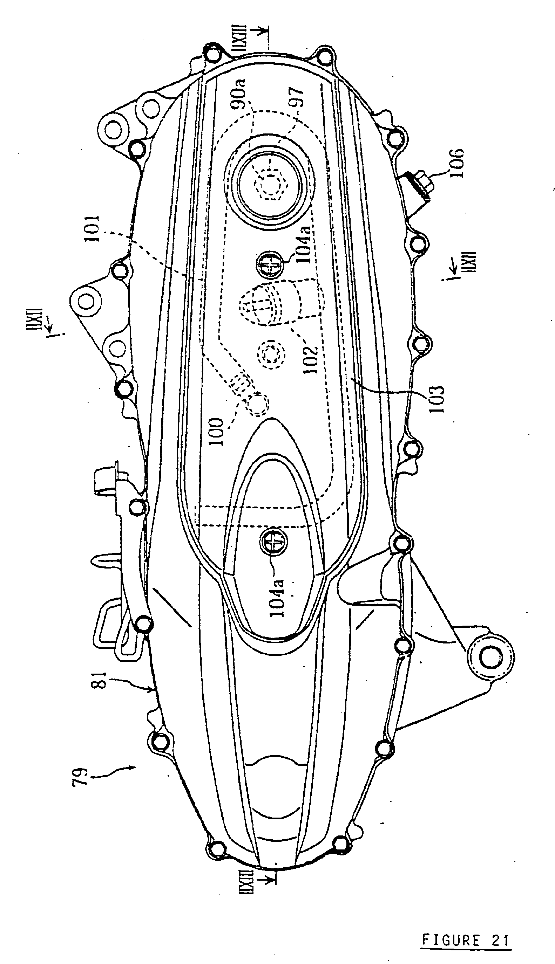

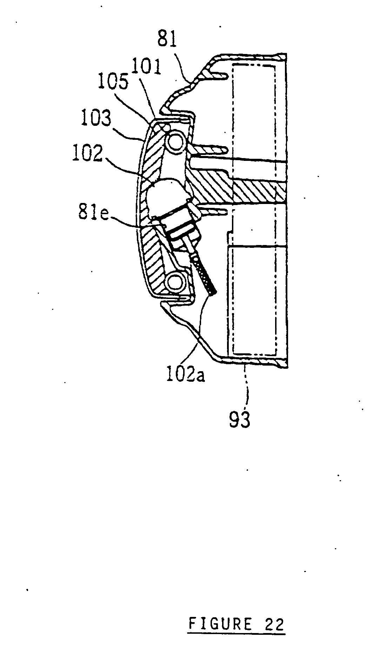

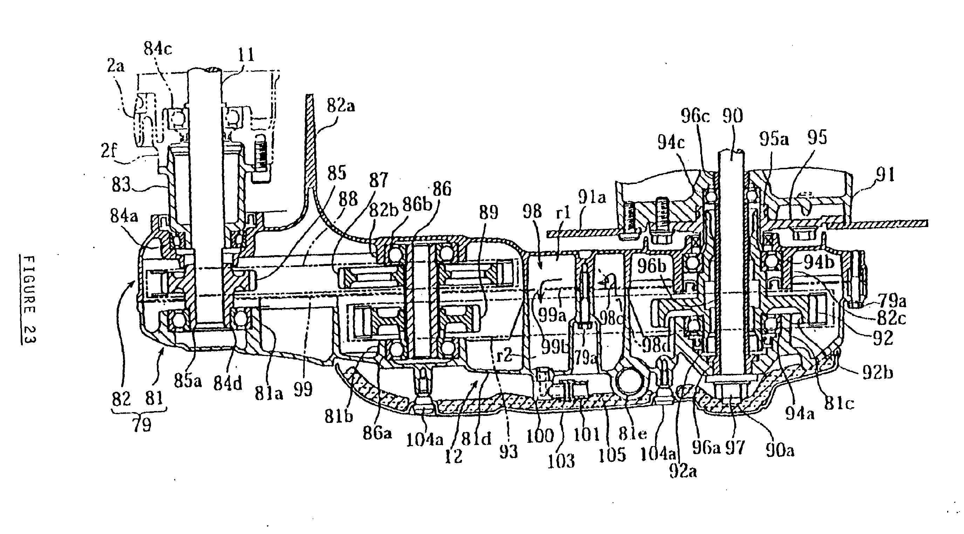

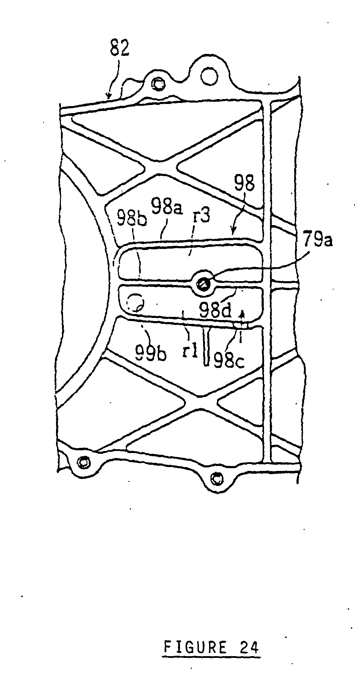

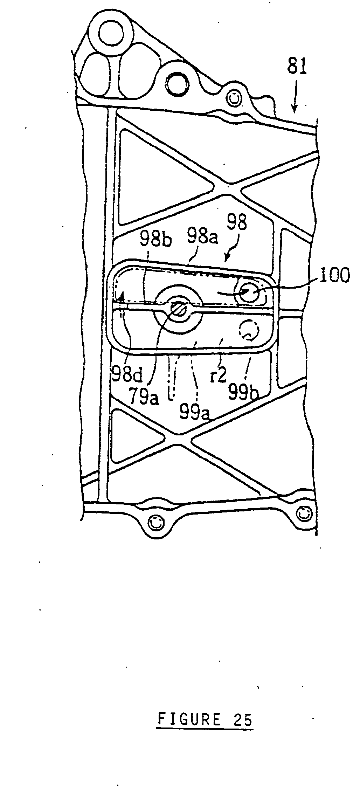

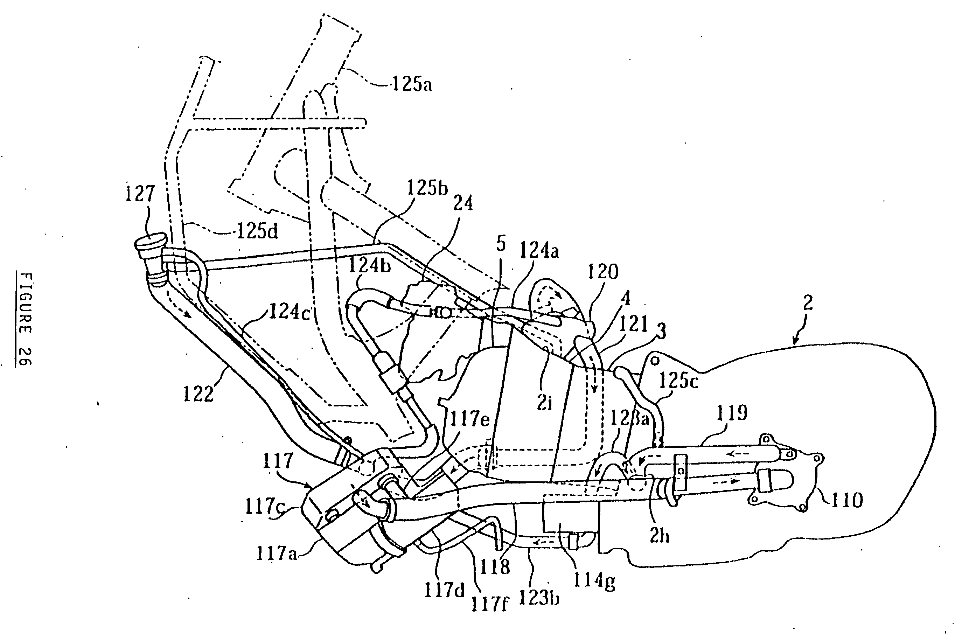

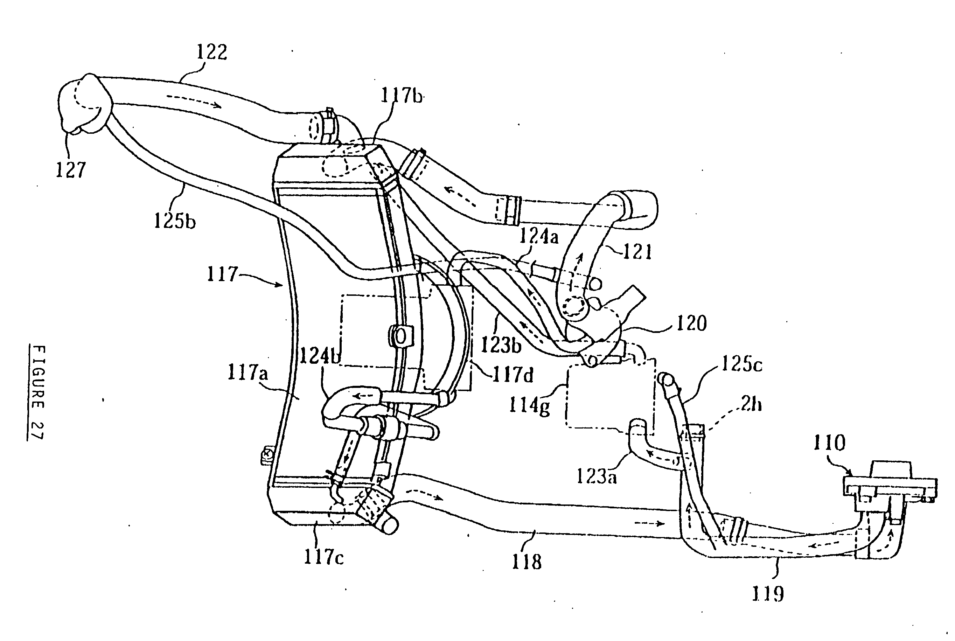

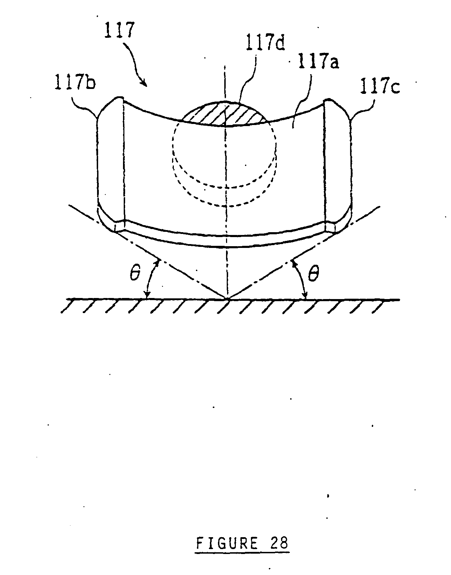

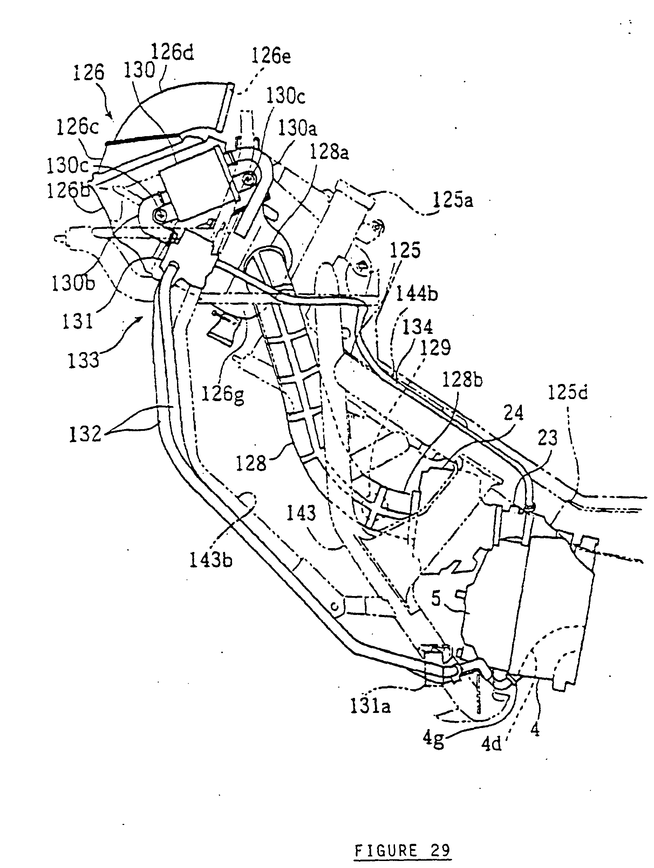

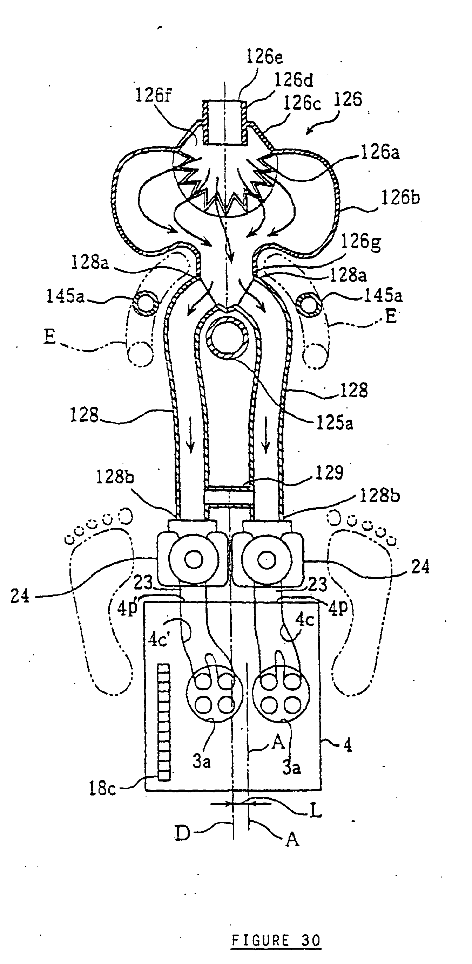

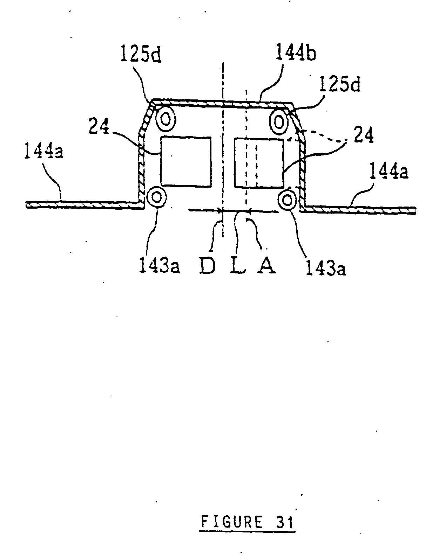

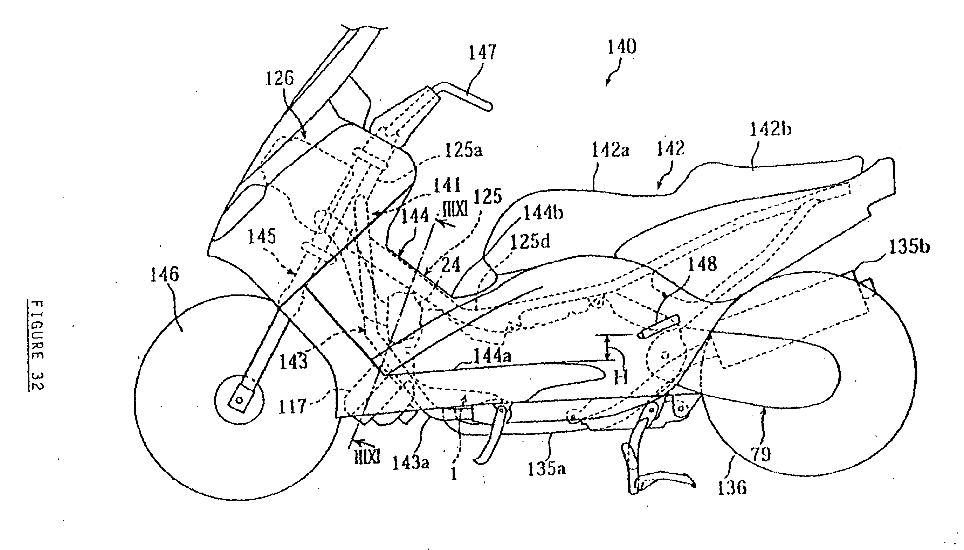

FIGs. 1 to 33 are used to explain an embodiment. FIGs. 1 and 2 are respectively plan view and side view of an engine unit. FIGS. 3, 4, and 5 are respectively a front view, a sectional plan view, and a sectional side view of the head cover of the engine. FIGs. 6 and 7 are respectively a front view and a sectional side view of the cylinder head with the head cover removed. FIG. 8 is a sectional plan view of a crankshaft portion. FIG. 9 is an enlarged view of the right end portion of the crankshaft. FIGs. 10, 11, and 12 are respectively a sectional plan view, a right side view, and a sectional rear view of a V-belt type of CVT. FIG. 13 is a sectional plan view of a centrifugal multi-plate clutch mechanism. FIGs. 14, 15, and 16 are respectively a left side view, a left side view partially in section, and sectional views of various parts of the crankcase. FIG. 17 is a side view as seen from inside the left case cover. FIG. 18 is a sectional front view of the portion including a cooling water pump and a lubricant oil pump. FIG. 19 is a sectional plan view of the left case cover. FIG. 20 is a side view as seen from inside the right cover. FIG. 21 is a left side view of a transmission case. FIG. 22 is a sectional rear view of an outside case. FIG. 23 is a sectional plan view of a transmission case. FIGs. 24 and 25 are respectively side views of an inside case and an outside case. FIGs. 26 and 27 are respectively a left side view and a plan view of cooling water piping. FIG. 28 is a front view of a radiator. FIG. 29 is a left side view including the intake system and secondary air supply system. FIG. 30 is a conceptual plan view of the intake system. FIG. 31 is a sectional rear view of a foot board portion. FIG. 32 is a side view of a two-wheeled motor vehicle of a scooter type.

Incidentally, the terms right and left unless otherwise defined are meant as seen from a rider sitting astride on the seat.

First, general constitution is described.

In the drawings (especially Fig. 32) is shown a scooter type of two-wheeled motor vehicle 140. The two-wheeled motor vehicle 140 has a vehicle body frame 141 made up of paired right and left main pipes 125, each extending from a front end head pipe 125a obliquely downward toward the portion where a seat 142 is mounted and having an upper side portion 125d farther extending toward the rear, and paired right and left down tubes 143, each extending from the head pipe 125a toward below the main pipe 125 and having a lower side portion 143a farther extending rearward. A front fork 145 is supported for free steering in right and left directions by means of the head pipe 125a. A front wheel 146 is shaft-supported at the lower end of the front fork 145. Steering handlebars 147 are secured to the upper end of the front fork 145.

The area from the upper side portion 125d of the main pipe 125 to the lower side portion 143a of the down tube 143 is surrounded with a foot board 144. The foot board 144 has paired right and left, low-level, foot placing portions 144a, and a tunnel portion 144b rising between both of the foot placing portions 144a.

The seat 142 is of a tandem type having a front seat portion 142a for a driver to sit astride and a rear seat portion 142b for a rear rider to sit astride. Rear rider steps 148 are provided behind below the front seat portion 142a. The rear rider steps 148 are positioned higher than the driver's foot placing portions 144a by a dimension of H and secured to the vehicle body frame 141 with bolts tightened.

An engine 1 is placed in a position within the foot board 144, between the right and left main frames or pipes 125 and between the down tubes 143. The engine 1 is secured to the vehicle body frame 141 indirectly through vibration absorbing rubbers or directly by tightening bolts. The rotation of the engine 1 is transmitted from the crankshaft 7 through a V-belt type of CVT 8 to a main shaft 9, through a centrifugal multi-plate clutch mechanism 10 mounted on the main shaft 9 to an intermediate shaft 15 and to a drive shaft 11, farther from the drive shaft 11 to a chain type transmission mechanism 12 to the rear wheel 136 (see Figs. 1, 2 and 32).

The engine 1 is of a water-cooled, four-stroke cycle type, and is roughly constituted as follows: The engine 1 has parallel two cylinders, each with four valves. At the front wall of a crankcase 2 made up of left and right split cases 2a and 2b are placed; a cylinder block 3, a cylinder head 4, and a head cover 5, one over another, with the cylinder bore axis (a) sloping up slightly from the horizontal line. Pistons 14, 14 are slidably inserted in cylinder bores 3a, 3a bored in the cylinder block 3, with the pistons 14, 14 connected through connecting rods 6, 6 to a crankshaft 7 of 360 degree phase.

A direct drive type of valve drive mechanism 22 (see Fig. 17) is placed in the cylinder head 4 and the head cover 5 to directly push and drive intake and exhaust valves 16, 17, two of each for each cylinder, by means of intake and exhaust camshafts 18, 19 through intake and exhaust lifters 20, 21 to open and close intake and exhaust valve openings 4a, 4b.

The exhaust valve openings 4b provided two for each cylinder are joined together into a single exhaust port 4d, bent approximately vertically downward, and guided out to the underside wall of the cylinder head 4. The outside connection openings of two exhaust ports 4d are connected respectively to exhaust pipes 135a (see Fog. 32) provided one for each cylinder. The two exhaust pipes 135a are interconnected through a communication pipe in the middle of their lengths and connected to a common silencer 135b.

Each of the exhaust pipes 135a is routed to pass below the rear rider step 148 which is located at the elevated position as described above. As the rear rider steps 148 are located at the elevated positions, spaces are formed below the steps, so that the exhaust pipes 135a can be routed without hindrance utilizing the spaces.

The two intake valve openings 4a, 4a provided for each cylinder are located above the cylinder bore axis (a) in the state of the engine being mounted on the vehicle body, joined together into a single intake port 4c which is guided out toward the head cover 5. The intake port 4c, as seen in side view of the vehicle, extends obliquely upward to form an angle of about 60 degrees from the cylinder bore axis (a), and further curves to become parallel to the cylinder bore axis (a), with its outside connection end surface 4f coinciding with the mating surface 4e on the head cover side.

Two carburetors 24 (see Fig. 2), provided one for each cylinder, are connected through a carburetor joint (intake manifold) 23 to the outside connection end surfaces 4f of the intake ports 4c. An intake passage axis (b) formed with the carburetor joint 23 and the carburetor 24 is approximately parallel to the cylinder bore axis (a).

Next, the layout of the carburetor is described.

The engine 1 of this embodiment is of a side cam chain type with two cylinders placed side by side and a cam chain located on one side (left) in the vehicle width direction. The engine 1 is mounted on the vehicle body with the engine center line (A), passing between right and left cylinder bore axes (a) as seen in plan view, displaced by a dimension (L) from the vehicle body center line (D) in the direction opposite the cam chain side (see Fig 30).

When the engine 1 is mounted as described above, if the carburetors 24, 24 of the right and left cylinders are positioned with equal right and left displacements on both sides of the engine center line (A), the carburetor 24 might interfere with the tunnel portion 144b of the foot board 144 covering the engine (see the broken line in FIG. 31). To avoid this, there is a concern that the width of the tunnel portion 144b must be widened.

To avoid the above problem, this embodiment is arranged that the carburetors 24, 24 are positioned with equal right and left displacements on both sides of the vehicle body center line (D), the intake ports 4c, 4c' formed in the cylinder head 4 are curved toward the cam chain side, and the center line between the outside connection ports 4p, 4p' of the intake ports is made to be in agreement with the vehicle body center line (D) (See FIG. 30). As a result, the right and left carburetors 24, 24 are less likely to interfere with the tunnel portion of the foot board, and the tunnel width need not be widened.

Since the mating surface 4e on the cover side of the cylinder head is made flush with the outside connection end surface 4f of the intake port 4c, the carburetors 24 may be positioned low without bending the carburetor joint 23 as seen in side view, namely they may be positioned near the cylinder bore axis (a) which is nearly horizontal to make it possible to reduce intake resistance, and to prevent the carburetors 24 from interfering with components located above the engine such as the ceiling of the tunnel portion 144a of the foot board 144.

The above layout of the carburetor is also applicable to single cylinder engines. In that case, the outside connection opening of the intake port is located with displacement toward the cam chain side, and the engine is mounted on the vehicle body with the cylinder bore center line displaced from the vehicle body center line toward the side opposite the cam chain so that the carburetor connected to the displaced outside connection opening is on the vehicle body center line.

Next the lubrication mechanism for the valve drive system is described.

The intake and exhaust valves 16 and 17 form about 30 degrees of included angle between them and urged with springs 25 to close the valve openings (see Fig 7). The intake and exhaust lifters 20 and 21 are attached to the upper ends of the intake and exhaust valves 16 and 17 and inserted for free sliding in intake and exhaust lifter guide holes 4g and 4h formed in the cylinder head 4 to correspond to the included angle of the valves. The lifter guide holes 4g and 4h are formed to penetrate, in the valve axis direction, boss portions 4i, 4i formed on a partition wall 4j which defines a camshaft side portion and a combustion chamber side portion inside the cylinder head 4.

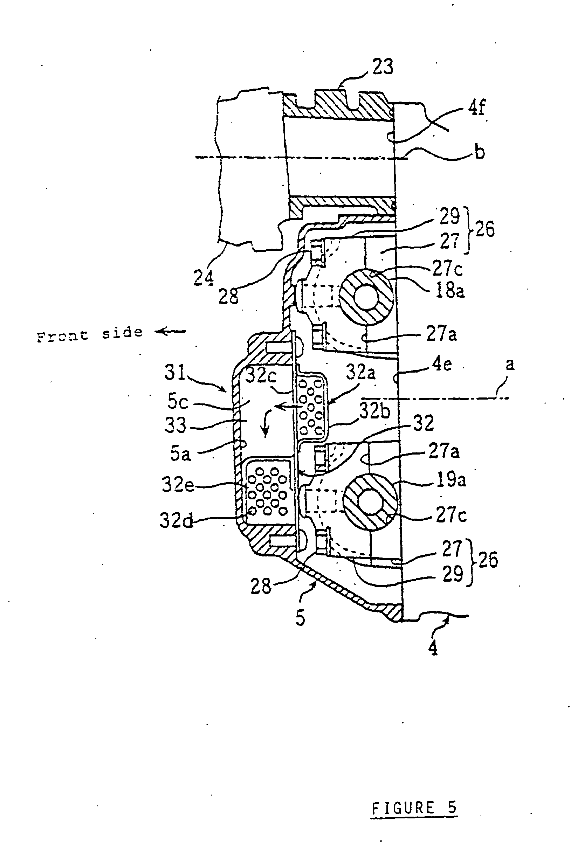

The intake and exhaust camshafts 18 and 19 are supported at their cam journal portions 18a and 19a for free rotation with camshaft bearings 26 (see Fig 5 and 6). The lower half portions of cam sprockets 18c and 19c formed integrally with the left ends of the camshafts are positioned in a chain chamber 4n formed in the left end of the cylinder head 4. The chain chamber 4n is in a rectangular shape in cross section normal to the cylinder bore axis (a) and extends in the direction of the cylinder bore axis (a).

Each of the camshaft bearings 26 is formed with a head side bearing portion 27 formed integrally with the cylinder head 4 and a cam cap 29 secured with bolts 28 to the head side bearing portion 27. Here, the mating surface 27a of the head side bearing portion 27 projects from the head cover side mating surface 4e on the opposite side of the block side mating surface 4k. The projecting dimension is set to be slightly greater than the radius of the cam journal portions 18a and 19a. This dimensioning prevents a machining tool used in machining to form the bearing surface 27c in the head side bearing portion 27 from interfering with the head cover side mating surface 4e. Therefore, there is no need of forming a clearance recess in the head cover side mating surface 4e of the cylinder head 4 for avoiding the interference with the machining tool. As a result, the head cover side mating surface 4e is flat without a recess to improve sealing property.

Incidentally, if such a clearance recess is provided in the head cover side mating surface, a sealing rubber must be placed in the recess. When the engine is placed almost horizontally as in this embodiment, part of the sealing rubber is immersed in lubricant oil and it is difficult to maintain high reliability of sealing property.

The valve drive mechanism 22 of this embodiment has an oil sump 30 for improving lubrication of sliding parts of the intake and exhaust lifters 20, 21 relative to cam noses 18b, 19b. The oil sump 30 is constituted in the shape of a receiving trough with a receiving wall 27b raised on the partition wall 4j so as to surround the lower parts of the opening circumscription of the lifter guide holes 4g, 4h, together with the head side receiving portion 27, and a covering wall 29a formed in a dome shape integrally with the cam caps 29 to interconnect the cam caps. The end surface of the receiving wall 27b is flush with the mating surface 27a of the head side receiving portion 27.

In this embodiment as described above, since the oil sump 30 is formed so that the cam noses 18b, 19b are dipped in lubricant oil, the oil collected in the oil sump 30 is splashed up by the rotation of the cam noses 18b, 19b and supplied in ample amount to sliding surfaces of the cam noses 18b, 19b relative to the intake and exhaust lifters 20, 21 and the lifter guide holes 4g, 4h to improve lubrication property.

A communication hole 4m for making communication between the camshaft placing chamber side and the side of the placing chamber for the valve spring 25 for the intake valve 16 is formed in the upper portion of the boss portion 4i for the intake lifter guide hole 4g of the partition wall 4j of the cylinder head 4. This permits lubricant oil to be guided through the communication hole 4m from the camshaft 18 side into the valve spring placing chamber side and supplied to the sliding surfaces of the intake valve 16 and the valve guide 16a, also improving lubrication property.

A breather mechanism 31 is also provided in the head cover 5 to separate oil mist mixed in blow-by gas discharged from inside to outside of the engine. The breather mechanism 31 is constituted that, in rough explanation, a breather recess 5a is formed in the inside surface of the head cover 5, and the opening of the recess 5a directed to the combustion chamber side is closed with a sheet metal-made bottom plate 32 to form a breather chamber 33.

The breather chamber 33 is constituted, as seen in the direction of the cylinder bore axis (a), with an inlet portion 33a located between left and right ignition plug insertion holes 5b' and 5b, a main part portion 33b covering exhaust side portion, and an outlet portion 33c located between the left side ignition plug insertion hole 5b' and the sprocket placing chamber 5c. An inlet chamber 32a is formed in part of the underside of the bottom plate 32 in the inlet portion 33a area by attaching a hat-shaped, sheet metal-made member. A large number of small-diameter guide holes 32b are bored in the wall of the inlet chamber 32 facing the left side ignition plug insertion hole 5b'. Part of the bottom plate 32 facing the inlet chamber 32a is partially cut and bent to form a communication hole 32c. The main part portion 33b is defined into plural small compartments with a partition wall 5c formed integrally with the head cover 5 and a partition plate 32e formed on the bottom plate 32, with the small compartments interconnected through communication holes 32d bored through the partition plate 32e.

The blow-by gas containing oil mist flows through the guide holes 32b into the inlet chamber 32a. As the blow-by gas flows through communication holes 32c, 32d, oil mist is separated as it adheres to the bottom plate 32, partition wall 5c, partition plate 32e, and breather recess 5a. The blow-by gas free from oil mist is discharged from the discharge pipe 33d outside the engine, and drawn for example into the intake system.

According to the embodiment described above, since the breather chamber 33 is formed by attaching the sheet metal-made bottom plate 32 on the reverse side of the head cover 5, the breather mechanism 31 is accomplished with a simple structure to separate and remove oil mist. The lubricant oil separated with the breather mechanism 31 and the lubricant oil that has lubricated the valve drive mechanism 22 return along the bottom portion of the chain chamber 4n to an oil pan (to be described later)

Next, the structure for lubricating the engine balancer device and the crankshaft is described.

The crankcase 2 is dividable into left and right cases 2a and 2b along the left-right dividing plane C running at right angles to the crankshaft 7. A reciprocating type of balancer device is positioned astride the dividing surface. The balancer device is constituted, in rough explanation, with a balancer cylinder 40 disposed to extend in the direction opposite the cylinder axis (a) and astride the left and right cases, and secured to the right case 2b, with a balancer piston 39 slidably inserted in the balancer cylinder 40, and with the balancer piston 39 connected through a balancer connecting rod 38 to a balancer off-center pin 7f of the crankshaft 7 (see Fig 1 and 8).

Left and right crank pins 7a and 7b to which the respective connecting rods 6a, 6bare connected are displaced from the crankshaft axis (c) by means of crank arms 7d and 7c. Balancer weights 7e and 7e, of the inner side crank arms 7c and 7c out of the four crank arms, extending in the direction opposite the crank pin side also serve as the balancer crank arms for supporting the balancer off-center pin 7f to which the balancer connecting rod 38 is connected.

Left and right crank pins 7a and 7b of the crankshaft 7 to which pins the left and right connecting rods 6a and 6b are connected are displaced radially outward from the crankshaft axis by means of the inside and outside crank arms 7c and 7d by a dimension of a half the piston stroke of the engine. The left and right crank journal portions 7p and 7q, of the crankshaft 7, adjacent the crank arms 7d and 7d are supported with large-diameter, left and right main bearings 34a and 34b. The left and right ends of the crankshaft 7 are supported with small-diameter sub-bearings 35a and 35b. The main bearings 34a and 34b are located as seen in plan view symmetrically on left and right sides of an engine center line (A) which passes the middle of the left and right cylinder bore axes (a), (a), and fitted into and supported with the left and right cases 2a and 2b.

A flywheel magneto 41 is fitted onto the left end tapered portion 7g of the crankshaft 7 and tightly secured through a collar 41 a using a nut 41 b. The left end sub-bearing 35a is attached to the end portion of the collar 41 a, and fitted into and supported with a bearing boss portion 36a of a case cover 36 fitted to the left mating surface of the left case 2a.

The outside crank arms 7d and 7d supporting the left and right crank pins 7a and 7b have balancer weights 7e' and 7e' extending beyond the crankshaft axis on the side opposite the crank pins 7a and 7b. The inside crank arms 7c and 7c are interconnected with the balancer pin 7f of the balancer mechanism. The balancer pin 7f is offset from the crankshaft axis by a dimension slightly smaller than half the piston stroke. To the balancer pin 7f is connected through the balancer connecting rod 38 to the balancer piston 39 inserted for free sliding in the balancer cylinder 40.

Here, since the dividing plane C of the left and right cases 2a, 2b is displaced leftward from the center line (A) of the engine, most part of the balancer cylinder 40 is located in the right case 2b. The balancer cylinder 40 is secured by tightening bolts 40a to a support rib 2c formed on the inside surface of the right case 2b. The balancer cylinder 40 is positioned so that its axis is on the same straight line with the crankshaft axis as seen in the direction of the crankshaft axis, and that both axes are parallel as seen in plan view (see Fig 20).

The crankshaft 7 is provided with an oil hole 7i for guiding lubricant oil fed under pressure from a lubricant oil pump to sliding surfaces of the connecting rods 6a, 6b, and crank pins 7a, 7b. The oil hole 7i is open (7j) at the left end surface of the crankshaft 7 and is not open at the right end surface. The opening 7j is located in an oil supply chamber 36b formed in the left case cover 36. The oil supplied to the oil supply chamber 36b is supplied through the oil hole 7i and a communication hole 7k to the above-mentioned rotary slide connecting parts.

Here, while the engine of this embodiment is provided with a dry type of CVT mechanism 8 on the right hand end of the crankshaft 7, since lubricant oil for lubricating the crankshaft is supplied from the left hand end as described above, there is no possibility of lubricant oil soiling the V-belt on the right hand end.

Next will be described the V-belt type of CVT mechanism 8.

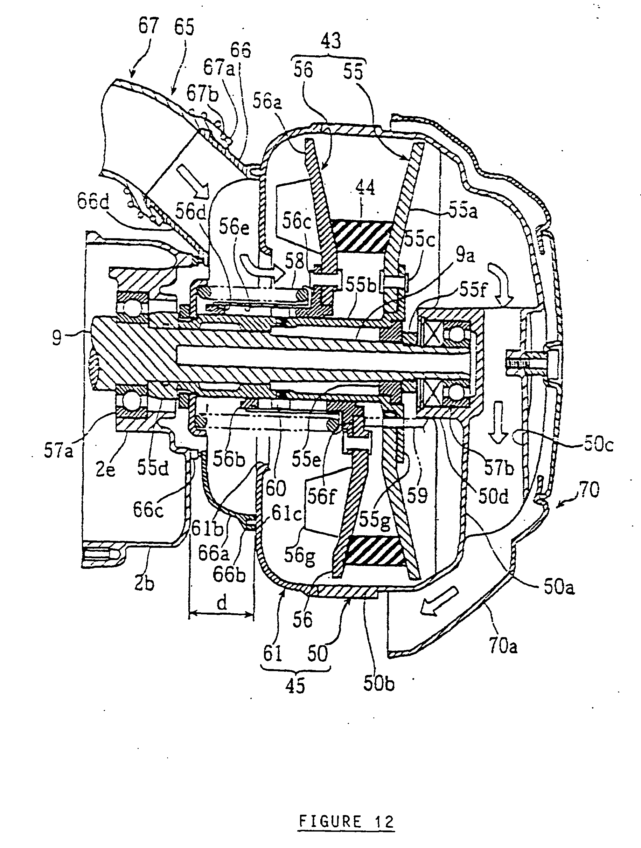

To roughly describe the constitution of the V-belt type of CVT mechanism 8 of this embodiment, a drive pulley 42 is attached to the right end 7m of the crankshaft 7. A driven pulley 43 is attached to the right end of a main shaft 9 placed parallel to and behind the crankshaft 7. A V-belt 44 is placed to girdle both of the pulleys 42 and 43. The above arrangement is surrounded with a belt case (belt chamber) 45 formed separately from the crankcase 2 (see Fig 10 and 12).

The drive pulley 42 is made up of a stationary pulley half 42a fixed to the right end 7m of the crankshaft 7 and a movable pulley half 42b attached for free sliding in the axial direction on the right end 7m. The stationary pulley half 42a is spline-fitted to the right end 7m and secured by tightening a nut 49 through; a slide collar 46, a cam plate 47 and a collar 48. The sub-bearing 35b is attached to the collar 48, and fitted into and supported with the outside case 50 of the belt case 45 (see Fig 8 and 9).

On the reverse side of the movable pulley half 42b is formed a cam surface 42c curving axially outward toward its circumference. The cam surface 47a of the cam plate 47 is tilted axially inward toward its periphery. The space between both of the cam surfaces 42c and 47a is filled with grease, and weights 51 are placed in the space. As the revolution of the crankshaft 7 increases, the weights 51 move radially outward by centrifugal forces to move the movable pulley half 42b axially inward. As a result, the belt girdling radius of the pulley increases to reduce speed reduction ratio.

A cover plate 52 for intercepting thrown grease is attached to the movable pulley half 42b. The cover plate 52 is made of sheet metal in an annular shape with its bottom surface 52a having an opening 52b, with an oil seal 53 interposed between its cylindrical portion 52c and the outside cylindrical surface of the movable pulley half 42b. A flange portion 52d formed by bending part of the cylindrical portion 52c in the radial direction is secured by tightening a bolt 54 to a boss portion 42d raise-formed on the periphery of the movable pulley half 42b.

As described above, attachment of the cover plate 52 to the movable pulley half 42b is done by bolt-tightening the flange portion 52d formed on the outer side than the oil seal 53, and the oil seal 53 is interposed. Therefore, grease is prevented from seeping out due to the rotation of the crankshaft 7. In this connection, if the bolt tightening position is radially inner than the oil seal 53, the centrifugal force will cause the grease present around the weights 51 to flow outward and seep out from around the bolt tightening position. To prevent it, another seal member will be required around the bolt. In the present embodiment, however, the grease is prevented from leaking without such an additional seal member.

The inside surface of the collar 48 attached to the right end 7m of the crankshaft 7 is provided with an annular recess 48a to form a grease reservoir together with the outside surface of the right end 7m of the crankshaft 7, and also provided with a communication hole 48b for connecting the grease reservoir to the fitting surfaces of the inner race of the sub-bearing 35b and the collar 48. The grease reservoir contains grease to prevent frictional heat produced with the rotation of the inner race of the subbearing 35b relative to the collar 48 and the crankshaft 7.

While it is a common practice to apply heat treatment for increasing the surface hardness of part of the crankshaft 7 surface where the sub-bearing 35b is attached, since the bearing is attached to the collar 48 in this embodiment, the heat treatment is applied to the collar 48. Therefore, unlike in an arrangement of attaching a bearing directly to the right end 7m of the crankshaft 7, the crankshaft surface need not be heat-treated. This reduces cost for the heat treatment and if the collar 48 wears, it can be easily replaced, also reducing the cost.

Here, the nut 49 is exposed out of the through hole 150a formed in the outside case 50 so that the crankcase 7, in the state of the outside case 50 remaining attached, can be rotated by engaging a tool with the nut 49. This improves the ease of checkup and maintenance as the crankcase 7 can be rotated in the state of only the case cover 51 removed, without removing the outside case 50.

Incidentally, for example in case of a scooter type of two-wheeled vehicle on which the engine of this embodiment is mounted, many components must be removed at the time of checkup and maintenance before removing the outside cover 50 because most part of the V-belt type of CVT 8 is covered with a vehicle body cover. Therefore, if a constitution is employed which requires removal of the outside case 50 at the time of checkup and maintenance, ease of checkup and maintenance work becomes poor. This embodiment, however, is free from such a problem.

The driven pulley 43 is made up of a stationary pulley half 55 fixed to the right end portion 9a of the main shaft 9 and a movable pulley half 56 attached in a position inner than the stationary pulley half 55 for free sliding in the axial direction. The stationary pulley half 55 comprises a pulley main part 55a made of iron to the axial center of which is secured a guide cylinder 55b made of aluminium alloy and secured using rivets 55c. The guide cylinder 55b extends inward in the vehicle width direction, spline-fits to the right end 9a, and is secured to the right end 9a by tightening a nut 55f through collars 55e and 55d to the bearing 57a (see Fig 10 and 12).

The movable pulley half 56 comprises a pulley main part 56a made of iron to the axial center of which is secured with rivets 56c a slide cylinder 56b made of aluminium alloy in a cylindrical shape. The slide cylinder 56b extends inward in the vehicle width direction and is slidably fitted on the guide cylinder 55b. The slide cylinder 56b is formed with a cam groove 56d extending in axial direction. The cam groove 56d is covered with a guide pipe 56e. A torque cam 60 slidably engages with the inside of the cam groove 56d. The torque cam 60 is screwed to and secured to the guide cylinder 55b. The slide cylinder 56b is urged with a forcing spring 58 in the direction of increasing the belt girdling radius on the pulley. In FIG. 12, the upper half of the drawing shows the state of the pulley diameter being minimum and the lower half shows the state of the pulley diameter being maximum.

The reverse side (opposite the belt engagement surface) of the pulley main part 56a has integrally formed plural vanes 56g for blowing air. The size of the vanes 56g is set to produce a small clearance relative to the inside case 61 of the belt case 45 when the movable pulley half 56 moves further inward from the minimum belt girdling radius position of the pulley.

The torque cam 60 serves to move the movable pulley half 56 quickly to a greater belt girdling radius position on the pulley by rotating the movable pulley half 56 relative to the stationary pulley half 55 and to transmit a greater torque to the rear wheel when a greater torque is required as in a quick acceleration. In this embodiment, however, the torque cam 60 serves also to restrict the amount of axial inward travel of the movable pulley half 56. That is, if the movable pulley half 56 moves more inward than the position for the minimum belt girdling radius, the torque cam 60 butts against the right end shown in the drawing of the cam groove 56d and is prevented from moving farther. In this way, the vanes 56g are arranged not to come into contact with the inside case 61 even if the movable pulley half 56 moves more inward than the position for the minimum belt girdling radius from one cause or another.

Here, the symbol 59 denotes a servicing bolt to be temporarily screwed in when the V-belt 44 is to be removed and replaced at the time of checkup service. When the bolt 59 is screwed into the overlapped portions of the pulley main part 55a of the stationary pulley half 55 and the flange portion 55g of the guide cylinder 55b, the movable pulley half 56 is moved against the urging force of the forcing spring 58, so that the V-belt 44 can be removed and replaced. In this embodiment, the diameter of the inside circumferential edge 56f of the pulley main part 56a is set so that the tip of the servicing bolt 59 contacts the inside circumferential edge 56f. This prevents the servicing bolt 59 from contacting the aluminium alloy-made slide cylinder 56b and causing it to yield.

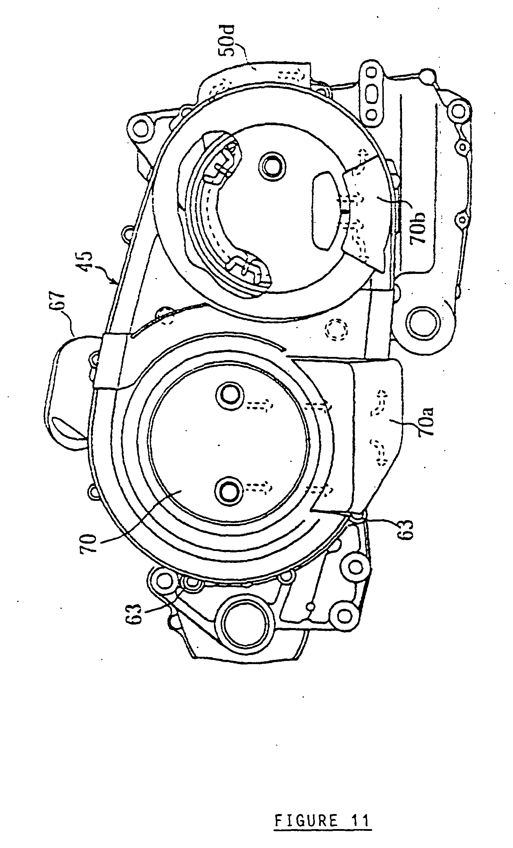

The belt case 45 is made of aluminium alloy, completely separately from the crankcase 2, with two, right and left split parts; the outside case 50 and the inside case 61. The relative positioning of the right and left cases 50 and 61 is done by the use of a dowel 62 and both cases are secured to the right case 2b by means of a bolt 63. The external surface of the belt case 45 is covered with a noise shield 70 with a specified gap. The inside surface of the noise shield 70 is provided with a sound absorbing member 71 (see Fig 11).

Here, the outside case 50 is in an elliptic bowl shape in side view, enclosing almost entire V-belt mechanism, and having a peripheral wall 50b and an outside wall 50a. The inside case 61 is in a shallow dish shape, closing the opening, directed inward in the vehicle width direction, of the outside case 50. While only a small clearance is present between the right case 2b and the front end of the inside case 61, a relatively large clearance (d) is produced between the right case 2b and the rear end of the inside case 61 by making the right case 2b recede inward in the vehicle width direction (see Fig 12).

The front part of the inside case 61 is formed with a front opening 61a of a diameter capable of exposing the crankshaft support boss portion 2d of the right case 2b. A seal plate 64 in an annular shape is held between the front opening 61a and the support boss portion 2d. A seal member 64a is placed at the periphery of the seal plate 64 to seal the gap between the front opening 61a and the support boss portion 2d. An oil seal 64b is placed at the inside circumferential edge of the seal plate 64 to seal the gap between the support boss portion 2d and the crankshaft 7.

The rear part of the inside case 61 is formed with a rear opening 61 b for admitting part of the driven pulley 43 where the urging spring 58 is attached. The rear opening 61b is made in a large diameter so that an air passage is present around the urging spring 58. A cup portion 66a of the joint 66 of a cooling air introduction passage 65 is placed and held between the rear part of the inside case 61 and the right case 2b so as to fill the clearance (d). The end surface of the opening 66b of the cup portion 66a is fitted to and supported with the support boss portion 61c formed on the reverse side of the inside case 61. The back side of the cup portion 66a contacts through a seal member 66c the right side surface of the right case 2b.

The air introduction passage 65 is constituted with the rubber-made joint 66 with its joint portion 66d connected to a plastic-made cooling air cleaner 68 through a rubber-made joint duct 67. The joint portion 66d is formed on the upper brim of the cup portion 66a, to which is fitted the downstream end 67a of the joint duct 67 and secured with a tightening band 67b. The joint duct 67 is located above the crankcase 2 and extends across the space between a fuel tank 138 and a helmet or article compartment 122, in rectangular shape in cross section cut in the direction normal to the axis, with the longer side of the rectangle in the longitudinal direction of the vehicle and the shorter side in the vertical direction.

A cylindrical case main part 68a of the cooling air cleaner 68 is fit-connected to the upstream end of the joint duct 67. A half-cylindrical filter element 68b is placed to cover the upstream end opening of the case main part 68a. The outside of the filter element 68b is covered with a cleaner cap portion 69a formed integrally with the vehicle body cover 69.

Part of the outside wall 50a, covering the driven pulley 43, of the outside case 50 is made to form an integral, duct-shaped, downward-extending rear air outlet 50c. The noise shield 70 is formed integrally with a rear discharge portion 70a for discharging cooling air coming out of the rear air outlet 50c to the underside of the belt case 45.

The front end face of the peripheral wall 50b of the outside case 50, together with the inside case 61, forms a downward-extending, cylindrical front air outlet 50d. Part of the outside wall 50a covering the drive pulley 42 is formed with a front side air outlet 50e, so that cooling air coming out of the front side air outlet 50e flows between the outside wall 50a and the noise shield 70, and is discharged from a discharge portion 70b formed below them.

When the main shaft 9 rotates, cooling air is drawn with the blower vanes 56g to flow from the cooling air cleaner 68, through the joint duct 67 and the joint 66, to the driven pulley 43 placing chamber of the belt case 45, with part of the cooling air, after cooling the driven pulley 43, discharged from the rear air outlet 50c. Remaining part of the cooling air is drawn to the drive pulley 42 placing chamber and discharged from the front face air outlet 50d, the front side air outlet 50e, and the front discharge portion 70b.

In this embodiment, since the belt case 45 is made completely separate from the crankcase 2, transmission of heat generated with the engine to the inside of the belt case 45 is reduced, temperature rise in the belt case is restricted and therefore the service life of the V-belt is extended. Another effect is the reduced emission of noise to outside because the belt case 45 shuts off engine noise.

Still another effect is that, since the clearance (d) is made between the belt case 45 and the side wall of the crankcase 2 and cooling air is caused to flow into the belt case 45, the crankcase 2 itself is cooled with the cooling air.

Another advantage is that, since the cooling air cleaner 68 is placed on the left side of the vehicle body and air is made to flow from the air cleaner toward the right side of the vehicle body through the joint duct 67, the space for placing the cooling air cleaner 68 can be provided easily and securely. In this case, since the joint duct 67 is placed between the fuel tank 138 placed on the front side and an articles compartment 139 where it is easy to place, cooling air can be drawn from the cooling air cleaner located on the left side of the vehicle body to the belt case 45 on the right side without duct layout problems. Another advantage is that, since the lid member (cleaner cap portion) 69a formed on the vehicle body cover 69 is also used as the lid member of the cooling air cleaner 68, the space for the cooling air cleaner 68 is saved, which also facilitates securing the layout space.

While this embodiment is arranged that the cooling air is supplied from the space between the belt case 45 and the right case 2b into the belt case 45 and is discharged from the rear air outlet 50c, it is also possible to arrange in a different way to supply cooling air from outside the belt case 45 and discharge from between the belt case 45 and the right case 2b. In this way, cooling property is improved by directing cooling air of a lower temperature to the belt.

Next, an automatic centrifugal clutch mechanism 10 is described.

The automatic centrifugal clutch mechanism 10 is attached to the left end portion of the main shaft 9. To put it roughly, the automatic centrifugal clutch mechanism 10 is constituted with a bowl-shaped outer clutch member (input housing) 72 having a bottom wall portion 72a and a peripheral wall portion 72b and spline-fitted to the main shaft 9 to be rotated together, a cylindrical inner clutch member (output housing) 73 having a cylindrical portion 73a and a hub portion 73b and placed coaxially in the outer clutch member 72, and a cylindrical output shaft 74 spline connected to the axial center of the hub portion 73b of the inner clutch member 73 to be rotated together, with the output shaft 74 supported through bearings 57d and 57e for free rotation on the main shaft 9. An output gear 57f is provided to engage with an intermediate large gear 15a of an intermediate shaft 15 (see Fig. 1, 2 and 13).

Five outer clutch plates 75 are placed in the outer clutch member 72. Pressing plates 75a and 75b are placed on both sides of the plates 75, and they are engage-secured to the outer clutch member 72 to be rotated together. Inner clutch plates 76, six in number, are placed among the outer clutch plates 75 and pressing plates 75a, 75b, and engage-secured to the cylindrical surface of the inner clutch member 73 to be rotated together. Urging plate springs 77 are placed among the outer clutch plates 75 for preventing them from sticking to each other by widening gaps among them.

A cam surface 72c is formed on the inside surface of the bottom wall portion 72a of the outer clutch member 72. Steel ball weights 78 are placed between the cam surface 72c and the pressing plate 75a. As the weights 78 move with centrifugal forces radially outward of the clutch mechanism, they move along the cam surface 72c to the right (clutch engagement direction) to press and move the pressing plate 75a and to set the clutch mechanism to the engaged state.

Here, the cam surface 72c has a drive surface 72d and an escape surface 72e; the former for guiding the weights 78 to move in the direction of forcing the outer clutch plates 75 and the inner clutch plates 76 into contact with each other when the centrifugal force increases, and the latter for releasing the pressing contact of both clutch plates 75, 76 as the centrifugal force decreases. The drive surface 72d is set to an angle θ1 θ1 relative to the line (e) which is normal to the clutch axis. The escape surface 72e is made to continue from the drive surface 72d radially inward and set to an angle θ2, greater than θ1, relative to the line (e).

The central part 9c of the main shaft 9 is supported through a bearing 57a on the main boss portion 2e of the right case 2b. The right end portion of the main shaft 9 is supported with the boss portion 50d of the outside case 50 of the belt case 45. The left end portion 9b of the main shaft 9 is supported through a bearing 57c with a boss portion 108b formed in the center of the rear wall 108a of an oil chamber inside half 108. As described later, the oil chamber inside half 108 is secured with bolts to an oil chamber outside half 36c of a left case cover 36 to form an oil storage chamber 107.

The left end portion 9b of the main shaft 9 is provided with an oil passage 9d which is open to an oil introduction hole 108c bored in the oil chamber inside half 108. Branch holes 9e and 9f are made to extend radially outward from the middle of the oil passage 9d. The former branch hole 9e communicates with a space surrounded with the outer and inner clutch members 72, 73 through an oil hole 72g cut-formed in the fore-end portion of the boss portion 72f of the clutch outer member 72 to supply oil among the outer and inner clutch plates 75 and 76. The latter branch hole 9f communicates with a space between the main shaft 9 and the output shaft 74 to supply lubricant oil to the bearings 57d and 57e.

With the clutch mechanism 10 of this embodiment, the weight 78 move radially outward with centrifugal forces as the engine revolution increases and their positions in the axial direction are determined with the cam surface 72c. When the engine revolution exceeds a specified value, the weights 78 moving along the drive surface 72d press and move the pressing plate 75a to the right and cause the outer and inner clutch plates 75, 76 to come into contact with each other. As a result, rotation of the engine is transmitted from the main shaft 9 to the output shaft 74 to drive and rotate the rear wheel through a chain type of transmitting mechanism 12.

As the engine revolution decreases, the weights 78 move radially inward. When the engine revolution decreases below a specified value, the weights 78 are permitted to move left from the escape surface 72e, the pressing force on the pressing plate is released, relative rotation occurs between the outer and inner clutch plates 75 and 76, and the engine rotation is not transmitted from the main shaft 9 to the output shaft 74.

This embodiment is arranged that the tilt angle θ2 of the escape surface 72e is set to be greater than θ1. Therefore, the permitted amount of movement of the weights 78 to the left when the engine rotation is not transmitted is greater by L than in the case of setting the tilt angle θ2 of the escape surface 72e the same as the tilt angle θ1 of the drive surface 72d. This permits the urging plate springs 77 to produce sufficient clearances among the outer and inner clutch plates 75 and 76. As a result, drag due to adhesion of both clutch plates 75 and 76 is eliminated, so that moving the vehicle when the engine is not operating is made easily.

Next, the engine lubrication system is described.

The lubrication system has an oil storage chamber 107 made separately from an oil pan 112 and having an upper overflow opening. The oil storage chamber 107 is placed at part, facing the main shaft 9, of the left case cover 36 attached to the outside of the left case 2a. The oil storage chamber 107 is constituted with an oil chamber outside half 36c formed integrally with the inside surface of the left case cover 36, and an oil chamber inside half 108 secured with bolts to the inside opening of the oil chamber outside half 36c. Both halves 36c and 108 are separably joined together with bolts 107c.

The outside surface of the oil storage chamber 107 is surrounded with a heat shield 109. The heat shield 109 is of a bowl-like shape with a heat insulation material 109a applied to its inside surface and secured with bolts 109b to the oil chamber left (out side) half 36c of the left case cover 36. This protects the rider from suffering burn or the like due to high temperature oil stored. While the heat shield 109 is made of a plastic material, its central part 109c is made separate from other parts and plated with chromium.

As described above, since the oil storage chamber 107 is formed with the oil chamber outside half 36c formed integrally with the inside of the left case cover 36 and the oil chamber inside half 108 attached to the oil chamber outside half 36c, the oil storage chamber, separate from the oil pan, is realized without problem while utilizing the space in the case cover of the crankcase.

This lubrication system also includes a lubricant oil pump 111 made by joining together a return pump 113 and a feed pump 114 coaxially and back to back each other within the left case 2a. Lubricant oil in the oil pan 112 is drawn up with the return pump 113 and collected in the oil storage chamber 107. At the same time, the lubricant oil in the oil storage chamber 107 is fed under pressure with the feed pump 114 to parts to be lubricated such as the bearing portions of the crankshaft 7 and the camshafts. After lubricating the parts to be lubricated, the lubricant oil falls back into the oil pan 112.

The lubricant oil pump 111, when seen from the side of the vehicle, is placed in the lower part of the area between the oil chamber outside half 36c of the left case cover 36 and the area where the flywheel magneto 41 is located. A cooling water pump 110 is placed coaxially outside the lubricant oil pump 111.

The rotary shaft 111a of the lubrication oil pump 111 is in engagement with the rotary shaft 110a of the cooling water pump 110 to be removable and to be capable of transmitting torque. A drive sprocket 111 b secured to the rotary shaft 111 a of the lubrication oil pump 111 is connected through a chain 111c to the pump drive sprocket 7n on the crankshaft 7.

The return pump 113 draws lubricant oil collected in the oil pan 112 through a suction hose 113b with its fore-end having an oil strainer 113a and feeds the oil to the oil storage chamber 107 through a return passages 113c, 113d formed in the left case 2a, and through the return passage 113e formed in the side wall of the oil chamber outside half 36c of the left case cover 36. The oil storage chamber 107 is constituted with the oil chamber inside half 108 and an oil chamber outside half 36c and one of them is provided with an overflow opening 108d. If the amount of lubricant oil in the oil storage chamber 107 increases in excess, the oil can overflow through the overflow opening 108d and return to the oil pan 112.

The side wall of the oil pan 112 is provided with a drain hole 112a into which is screwed a drain bolt 116. The drain hole 112a is made to communicate with a drain oil passage 107a which communicates with the bottom portion of the oil storage chamber 107. Therefore, when lubricant oil is to be changed, an oil cap (not shown) on the oil filler inlet 107b and also the drain bolt 116 are removed. In this way, lubricant oil is discharged simultaneously from both of the oil pan 112 and the oil storage chamber 107.

To replenish a specified amount of lubricant oil, the drain bolt 116 is screwed and lubricant oil is poured through the oil filler inlet 107b into the oil storage chamber 107 until the oil surface reaches the oil level of the oil level gauge 115 attached to the left case cover 36. In this case, first the oil surface in the oil storage chamber 107 reaches the overflow opening 108d, then the oil surface in the oil pan 112 rises and reaches the oil level of the oil level gauge 115.

With this embodiment as described above, lubricant oil in both of the oil storage chamber 107 and the oil pan 112 may be drained easily by removing only the single drain bolt 116. The oil levels in both of the oil storage chamber 107 and the oil pan 112 may be brought to the specified levels easily and reliably by supplying lubricant oil to the oil storage chamber 107 only. In this way, this embodiment makes it easy to change lubrication oil although the oil storage chamber 107 and the oil pan 112 are provided separately.

The feed pump 114 draws lubricant oil in the oil storage chamber 107 through passages 114a, 114b, pressurizes and supplies it to an oil cooler 114g through oil passages 114c, 114d, a check valve 114e, and a relief valve 114f. Part of the lubricant oil cooled with the oil cooler 114g is supplied to the oil hole 7i of the crankshaft 7 through an oil passage 114h, an oil hose 114i, an oil passage 114j, and an oil supply chamber 36b. Remaining part of the oil is supplied through an oil passage 114k to the camshaft. Incidentally, the symbol 114m denotes an oil pressure switch provided at the outlet side of the oil cooler 114g.

The top end portion of the feed pump 114 is formed with an air vent hole 114n to which is fitted an air vent pipe 114p. The air vent pipe 114p extends upward with its top end provided with a valve 114q which is located in the upper part of the left case 2a. Air venting may be done by operating to open and close the valve 114q through an external work opening.

Next, the power transmission device for transmitting engine power to the rear wheel is described.

The power transmission device has a chain type of transmission mechanism 12 of an oil bath type contained in a transmission case 79 made of aluminium alloy in an elongate circular shape as seen in side view. The transmission case 79 is of a right-left, two-piece split type made up of an outside case 81 and an inside case 82. The two cases, with a sealing gasket 99 interposed between them, are positioned with dowels, and separably joined together using bolts 79a. The transmission case 79 also serves as a left arm main part of a rear arm for supporting the rear wheel 136 for free vertical swinging relative to the vehicle body.

The transmission case 79 and the right side arm main part 80 are joined together at their front parts to be roughly in a gate shape as seen in plan view. To describe it more in detail, the connection bracket extending from the front part of the inside case 82 inward in the vehicle width direction and the bracket 80a extending from the right side arm main part 80 inward in the vehicle width direction are joined together by means of bolts.

The front end of the inside case 82 is rotatably supported through a bearing 84a on the left end of a pivot cylinder 83. The right end of the pivot cylinder 83 is secured with bolts to a pivot support portion 2f formed on the rear end of the left case 2a of the crankcase 2. A pivot shaft 80b is raise-formed on the inside surface of the front end portion of the right side arm main part 80 coaxially with the pivot cylinder 83. The pivot shaft 80b is rotatably supported through a bearing 84b with a pivot support portion 2g formed at the rear end of the right case 2b. As described above, the transmission case 79 and the right side arm main part 80 swing up and down as a single rear arm.

The chain type of transmission mechanism 12 is constituted that; a drive sprocket 85 spline-fitted to the left end of the drive shaft 11 is connected through a primary chain 88 to an intermediate driven sprocket 87 spline-fitted to an intermediate shaft 86 placed in the transmission case 79, and an intermediate drive sprocket 89 spline-fitted to the intermediate shaft 86 is connected through a secondary chain 93 to a driven sprocket 92 connected to the hub 91 of the rear wheel 136.

The primary chain 88 is smaller in width than the secondary chain 93. The secondary chain 93 is placed outer side in the vehicle width direction than the primary chain 88.

The right side portion of the drive shaft 11 is supported for rotation through bearings 84c on the left and right cases 2a and 2b. The boss portion 85a of the drive sprocket 85 attached to the left end of the drive shaft 11 is supported for rotation through a bearing 84d on the fore-end boss portion 81 a of the outside case 81. The left and right end portions of the intermediate shaft 86 are supported for rotation through bearings 86a and 86b on the intermediate boss portions 81 b and 82b of the outside and inside cases 81 and 82.

A cylindrical member 92a is formed integrally with the axial central part of the driven sprocket 92. Part of the cylindrical member 92a located to the left of the driven sprocket 92 is supported for rotation through an outside bearing 94a on a rear end boss portion 81 c integrally raise-formed with the rear inside surface of the outside case 81. The right side portion of the cylindrical member 92a is supported for rotation through an inside bearing 94b on a rear end boss portion 82c integrally raise-formed with the rear inside surface of the inside case 82.

Here, the inside fore-end portion of the rear end boss portion 81 c of the outside case 81 is inserted in a recess 92b formed in the left side surface of the driven sprocket 92. Therefore, the outside bearing 94a is located in the driven sprocket 92. As a result, extending amount of the rear end bearing portion in the vehicle width direction is restricted, and the overall dimension of the transmission device in the vehicle width direction is prevented from increasing.

The inside bearing 94b is located on the extended line of the primary chain 88. That is, as the primary chain 88 is placed inside the secondary chain 93, a space is present behind the primary chain 88 and outside the rear wheel, and the space is utilized to place the inside bearing 94b. This arrangement also prevents the transmission device from expanding in the vehicle width dimension.

The right end portion of the cylindrical member 92a is spline-connected to the inside cylindrical surface of a cylindrical connection boss portion 95a of a cover plate 95 bolt-secured to the left end surface of the hub 91. The left side portion of the rear wheel shaft 90 is coaxially inserted into the cylindrical member 92a, and the left end portion 90a of the rear wheel shaft 90 projects in the vehicle width direction from the rear end boss portion 81c of the outside case 81. The projecting portion is secured with a nut 97 through collars 96a to 96c interposed between the nut and a bearing 94c. As a result, the axial position of the rear wheel 13 is determined relative to the outside case 81 of the transmission case 79. Here, the symbol 91 a denotes a break disk of the rear wheel break.

As described above, this embodiment is arranged that the right end portion of the rear wheel shaft 90 is supported with the right side arm main part 80, the left end portion of the rear wheel shaft 90 is made to project from the outside case 81, and the nut 97 is screwed to the projecting portion, so that the left end portion of the rear wheel shaft 90 is supported. As a result, the rear wheel shaft 90 is supported with a wide span with improved support strength.

Since the cylindrical member 92a disposed outside the rear wheel shaft 90 is supported with the inside bearing 94b placed in the inside case 82 and the outside bearing 94 placed in the outside case 81, the cylindrical member 92a is supported with a wide span with improved support strength.

As described above, since the primary chain 88 is smaller in width than the secondary chain 93 and the secondary chain 93 is placed outer than the primary chain 88 in the vehicle width direction, the vehicle width, especially in the front part of the transmission case 79, is prevented from increasing while widening the span of supporting the cylindrical member 92a.

A breather chamber 98 is formed in the transmission case 79 so as to be located within the track of the secondary chain 93. The breather chamber 98 has a lower right chamber r1, a lower left chamber r2, and an upper chamber r3. These chambers r1, r2, and r3 are formed that upper and lower void chambers of rectangular parallelepiped shape are formed with a rectangular peripheral wall 98a and a central partition wall 98b, and the lower void chamber is divided into right and left chambers with the partition wall portion 99a of the gasket 99. The upper left and right chambers are interconnected through an opening 99b bored in the partition wall portion 99a. FIGs. 24 and 25 are views of the inside case 82 and the outside case 81 as seen from the mating plane side.

Part of the side wall 81 d of the outside cover 81 constituting the breather chamber 98 is connected to a discharge joint 100. A discharge hose 101 connected to the discharge joint 100 extends rearward along the external surface of the side wall 81 d, curves in an arcuate shape down forward behind the rear wheel securing nut 97, further extends forward, and rises up in front of the discharge joint 100. A lubricant oil filler inlet 81e is formed in the vicinity of the rear wall of the breather chamber 98 of the outside case 81. An oil cap 102 having an oil gauge stick 102a is screw-fitted into the inlet 81e.

The air in the transmission case, stirred by the rotating gears and running chains, contains oil mist. The air containing oil mist flows from the introduction hole 98c formed in the bottom wall of the lower right chamber r1, through the right-left connection hole 99b made in the partition wall 99a of the gasket 99, enters the lower left chamber r2, and through the over-under connection hole 98d formed in the partition wall 98b to the upper chamber r3. The oil mist contained in the air adheres to wall surfaces as the air flows through the breather chamber 98, and air free from the oil mist is discharged outside through the discharge hose 101.

A case cover 103 is removably attached and secured to the side wall 81d of the outside case 81 using bolts 104a. The case cover 103 is of an elongate circular shape (elliptic) in side view and of a size sufficient to cover the discharge joint 100, the discharge hose 101, the oil cap 102, and the nut 97 fitting area of the rear wheel shaft 90, and to its inside surface is applied a sound absorbing material 105. The symbol 106 denotes a drain bolt, screwed into the bottom wall of the transmission case 79, for discharging lubricant oil in the transmission case 79.

Since this embodiment is arranged that the breather chamber 98 is located in the track of the secondary chain 93, a void space is effectively utilized. Since the discharge hose 101, the oil cap 102, and the nut 97 fitting area of the rear wheel shaft 90 are covered with the case cover 103, external appearance is prevented from becoming poor and noise is restricted from being emitted outside.

As shown in FIG. 2, the drive shaft 11, the intermediate shaft 86, the rear wheel shaft 90, and the intermediate shaft 15 on the engine side are arranged on a straight line, and the main shaft 9 of the V-belt type of transmission mechanism is located with an upward displacement from the above-mentioned straight line. Corresponding to the amount of the upward displacement of the main shaft 9 as described above, the intermediate shaft 15 and the entire V-belt type of transmission mechanism can be located with a forward displacement. As a result, the entire transmission device can be reduced in its front-to-rear dimension.

Since this embodiment is arranged that the dry V-belt type of transmission mechanism 8 using a V-belt is placed on the right side of the crankcase 2 and the oil bath type of chain-driven transmission mechanism 12 is placed in the left rear position, the dry type of V-belt is prevented from being soiled with lubricant oil in the oil bath.

Next, the cooling water system is described.

The cooling water system of the engine of this embodiment consists of a main route for cooling the engine, an oil cooler route for supplying cooling water to the oil cooler 114g. and a carburetor 24 route for preventing the carburetor from freezing. With the main route, the cooling water pump 110 draws cooling water from the secondary side header 117c of a radiator 117 through a return hose 118, pressurizes the cooling water and supplies it through a supply hose 119 to an engine water supply port 2h of the left case 2a. The water supplied is further supplied through cooling jackets in the cylinder block and cylinder head, from an engine water drain port 2i to a thermostat valve 120, and a connection hose 121, to a primary side header 117b of the radiator 117.

With the oil cooler route, cooling water is supplied through a cooler water supply hose 123a branched from the vicinity of the engine water supply port 2h of the supply hose 119 to the oil cooler 114g. The cooling water coming out of the oil cooler 114g is returned to the primary side header 117b of the radiator 117 through the a cooler return hose 123b.

With the carburetor route, cooling water in the engine is taken out from an upstream side of the valve member of the thermostat valve 120 and supplied to the jacket of a carburetor 24 through a carburetor primary side hose 124a. The cooling water after flowing through the carburetor 24 returns to the primary side header 117b of the radiator 117 through a carburetor secondary side hose 124b.

Here, the symbol 125c stands for an air vent hose for removing air remaining in the region from the cooling water pump 110 to the supply hose 119, and the symbol 125b stands for another air vent hose for removing air remaining in the engine. The symbols 127 stands for a replenishment water cap attached to a vehicle body cover support frame 125d located in front of the head pipe 125a. The replenishment water cap 127 is connected to the primary side header 117b of the radiator 117 through a replenishment water hose 122.

As described above, the cooling water pump 110 is placed on the side (left in the vehicle width direction) opposite the V-belt type of CVT 8 which is dry type and must be protected against water. Therefore, the problem of water entry, due to the layout position of the cooling water pump 110, into the dry type of belt case 45 is avoided.

Placing the cooling water pump 110 on the opposite side of the belt case is made that the cooling water pump 110 is placed behind the flywheel magneto housing portion 36c for housing the flywheel magneto 41 projecting in the vehicle width direction of the case cover 36. As a result, the flywheel magneto housing portion 36c serves as a protecting member for protecting the cooling water pump 110 from oncoming flying gravel or the like.

Since the cooling water pump 110 is placed in a relatively recessed position between the flywheel magneto housing portion 36c of the case cover 36 and the oil storage chamber 107 located axially outer side of the clutch mechanism 10, otherwise unused space is utilized.

As described above, the engine 1 is placed in the foot board 144, the radiator 117 is placed inside front end of the foot board 144, and the radiator 117 and the cooling water pump 110 are interconnected through the return hose 118 routed under the foot board 144, otherwise unused space is utilized for laying cooling water piping.

To roughly describe the radiator 117, it comprises a core section 117a curved like an arcuate plate, with its right end provided with a primary side header 117b, with its left end provided with the secondary side header 117c, and with its back side provided with a blower 117d. The blower 117d has an outside diameter that is greater than the height of the core section 117a and is placed to project upward beyond the upper edge of the core section 117a. Therefore, this embodiment is arranged to provide a cover 117e (the hatched area in FIG. 28) for covering the projecting portion. As a result, all the cooling air drawn with the blower 117d passes the core section 117a, the blower efficiency is prevented from lowering.

The blower 117d is connected to a breather pipe 117f. The breather pipe 117f is extended once upward from the position of connection with the blower 117d and then bent rear downward. This prevents water splashed up with wheels or rain water from finding its way into the breather pipe 117f.

The radiator 117 is formed in an arcuate shape as described above and moreover it is tilted rearward from the vertical. As a result, the primary and secondary headers 117b and 117c located on the outer sides in the vehicle width direction are located higher than the central part from the ground. As a result, a greater bank angle θ can be secured than in an arrangement in which the radiator is placed upright (See FIG. 28)

Since the radiator 117 is curved upward due to the layout described above, air may collect in the header portions. In this embodiment, however, since the header portion is connected to the replenishment water cap through the air vent pipe 124c, the air can be discharged. Since the air vent pipe 124c is routed in the foot board 144, no problem arises in terms of layout space.

Next, the intake system is described.

The air cleaner 126 of the suction device of the engine of this embodiment is placed in front of the head pipe 125a on the vehicle centerline D as shown in FIG. 30. The air cleaner 126 is constituted that a half-cylindrical element 126a is placed, with its arcuate surface inside, in an air cleaner case 126b, and a lid plate 126c is attached to close the inside of the arcuate shape. FIG. 30 is a simplified conceptual illustration of the intake system of this embodiment.

The air cleaner case 126b is made in a box shape bulging right and left in front of the rotation loci E, E of the fork main parts 145a of the front fork 145. The front wall of the air cleaner case 126b has an opening 126f to which is attached the removable lid plate 126c. The lid plate 126c is provided with an external air intake duct 126d curved up in an arcuate shape with its intake opening 126e directed rearward. The filter element 126e is attached to the lid plate 126c.

The air cleaner case 126b has an integrally formed duct connecting portion 126g bulging rearward to approach the head pipes 125a between the rotation loci E, E of the fork main parts 145a. The left and right side walls of the duct connecting portion 126g are connected to the upstream portions 128a of the left and right intake ducts 128. Both of the intake ducts 128 extend rear downward to pass between the head pipe 125a and the rotation loci E, E of the fork main parts 145a, and their downstream portions 128b are connected to left and right carburetors 24. The middle parts of the left and right intake ducts 128 are in mutual communication through a bypass duct 129. In this embodiment, parts of the intake ducts 128 near the carburetors 24 are in mutual communication through the bypass duct 129.

Since the intake device of this embodiment is arranged with the air cleaner 126 mounted in front of the head pipe 125a, unlike in case of mounting it near the carburetors 24, the problem of an increased height of the floor tunnel is avoided. Other advantages are that, since the air cleaner 126 is located in a high and forward position, it is less likely to draw in dust and that, since the intake air temperature is lower than in case of placing the air cleaner near the engine, charge efficiency of the engine is enhanced.

When placing the air cleaner 126 in front of the head pipes 125a, the element 126a is made in the half-cylindrical shape and placed with its arcuate outer surface facing inside of the case. As a result, a smooth intake air flow is secured while evading the rotation loci E of the front fork.

Since the left and right intake ducts 128 are interconnected for communication through the bypass duct 129 near the carburetors 24, influence on the carburetor adjustment is alleviated while using long intake ducts.

Next, the exhaust system is described.

The exhaust device of the engine 1 of this embodiment is provided with a secondary air supply device (AIS) 133 for supplying air to the exhaust passage. The secondary air supply device 133 is constituted that a valve unit 131 and an AIS air cleaner 130 are placed on the right side of the air cleaner 126, an air control valve side of the valve unit 131 and a carburetor joint 23 of the intake system are interconnected through a vacuum introduction hose 134, a check valve side of the valve unit 131 and a connection hole 4g communicating with the exhaust ports 4d of both cylinders are interconnected for communication through two supply hoses 132.

The AIS air cleaner 130 is constituted with a cylindrical case which houses an element, and secured together with the air cleaner 126 to the vehicle body frame. The suction hose 130a to the AIS air cleaner 130 is bent downward to prevent rain water or the like from entering.

The air control valve of the valve unit 131 serves to draw air by intake vacuum from the AIS air cleaner 130 side and supply it by exhaust pulsation to the exhaust port 4d. The check valve is connected to the delivery side of the intake control valve and serves to prevent reverse flow of exhaust gas from the exhaust port.

The vacuum introduction hose 134 is routed in the tunnel portion 144b of the foot board 144 along the main frame 125. The air supply hose 132 is routed in the foot board 144 along an auxiliary pipe 143b located in front of the down tube 143.

The secondary air supply device of this embodiment is constituted that the AIS air cleaner 130 and the valve unit 131 are placed in front of the head pipe 125a, apart from and high above the exhaust port 4d. Therefore, unlike in case those components are placed near the engine, such problems are avoided as; difficulty in securing a layout space, increased height of the foot board, and likelihood of being soiled with exhaust gas.

Since the components of the secondary air supply device such as the valve unit 131 and the AIS air cleaner 130 are mounted in positions apart from the engine, engine vibration is not transmitted to those components. Therefore, it is unnecessary to take measures for the anti-vibration strength of those components, which is advantageous for reducing weight and cost.

While the above embodiment is arranged that the air control valve and the check valve are made into a single unit and placed on the side of the air cleaner 126, the check valve 131a may be placed near the engine as shown in FIG. 29 with a dash-and-double-dotted line. When the check valve 131a is placed near the engine as described above, exhaust gas is prevented from entering the air supply hose 132 and so the air supply hose 132 is free from being soiled or decrease in durability.

While the above embodiment is arranged to employ the AIS cleaner 130 dedicated to the secondary air supply device, it may also be arranged to draw secondary air from the air cleaner 126. In that case, more room is provided for placing components corresponding to the space for the AIS-dedicated air cleaner that is made unnecessary.

The embodiment described above teaches a cooling system for a motorcycle engine adapted to supply cooling air to a V-belt type of CVT (continuously variable transmission) provided on a side portion of the crankcase. The V-belt type of CVT is located on one side of the engine, that an air cleaner is located on the other side of the engine, and that the air cleaner and the belt case of the V-belt type of CVT are interconnected through a cooling air duct, with the air duct disposed across the vehicle width and located above the engine.

The V-belt type of CVT is located on one side of the engine, the air cleaner is located on the other side, and the air cleaner and the belt case are interconnected through the cooling air duct placed laterally above the engine. Therefore, the problem that the space for placing the air cleaner for cooling air cannot be secured depending on the layout of the belt case is avoided, and the air cleaner having a sufficient filtering area can be placed without any restriction.

Furthermore, the air cleaner comprises a cleaner case for housing therein a filter element, with the cleaner case comprising a case main part for housing the element and a lid member for covering the case main part and serving as part of a vehicle body cover.

Since the air cleaner case is made of the case main part and the lid member which covers the case main part and also serves as part of the vehicle body cover, the space for placing the air cleaner can be secured more easily than in an arrangement in which a cleaner case having a dedicated lid member is placed within the vehicle body cover.

Omission of a dedicated lid member makes it possible to reduce the number and cost of components accordingly.

The embodiment mentioned above also teaches a cooling water circulation system for an engine for scooter type of motorcycles adapted to circulate cooling water between a radiator and parts to be cooled by the use of a cooling water pump. The engine is mounted immovably and with a V-belt type of CVT located on one side on a vehicle body frame, and that the cooling water pump is placed on the opposite side to the V-belt type of CVT of the engine in the vehicle width direction.

Since the cooling water pump is placed on the opposite side to the V-belt type of CVT of the engine in the vehicle width direction, even if water leakage occurs from around the cooling water pump, the leaked water does not wet the V-belt type of CVT, and problems of slip or poor durability of the V-belt due to the water leakage are avoided. Moreover, since the engine is mounted immovably on the vehicle body frame although the engine is for use in the scooter type of motorcycles, the problem of connection of cooling hoses to the cooling water pump becoming loose or coming off due to up and down swing of the engine may be avoided. This also makes it possible to avoid the problem of the V-belt being wetted with leaked water.

Furthermore, a flywheel magneto is located on said opposite side end in the vehicle width direction of the crankshaft and the cooling water pump is located behind the flywheel magneto.

Since the cooling water pump is located behind the flywheel magneto, the flywheel magneto housing portion of the crankcase cover serves as a protector member to protect the cooling water pump from flying gravel or the like coming from the front direction.

Furthermore, a clutch mechanism is attached to said opposite side end in the vehicle width direction of a main shaft on which is attached a driven pulley of the V-belt type of CVT, and that the cooling water pump is located between the clutch mechanism and the flywheel magneto as seen in side view of the vehicle.

Since the cooling water pump is located between the clutch mechanism and the flywheel magneto as seen in side view of the vehicle, the cooling water pump is located by utilizing otherwise unused space between the clutch mechanism and the flywheel magneto.

Furthermore, the engine is mounted within a low-level foot board, the radiator is placed at the front part of the foot board, and the radiator and the cooling water pump are interconnected for fluid communication through cooling water hoses routed under the foot board. The engine is mounted within the low-level foot board, the radiator is placed in the front end area of the foot board, and the radiator is connected for fluid communication with the cooling water pump through the cooling water hoses routed under the foot board. Therefore, the interior of the foot board, otherwise unused, is utilized to route the cooling water hoses.

The embodiment mentioned above shows a motorcycle, especially a scooter type motorcycle, with an engine 1 supported on a vehicle body frame 141 and a transmission 8 supported at a first side of said body frame 141 with regard to a width direction of said motorcycle. A cooling means is at least partly located on a second side of the body frame 141. Said second side is opposite to said first side with regard to the width direction of said motorcycle.

Said cooling means comprises an air cooling means for supplying cooling air to the transmission 8. An air cleaner 68 of said air cooling means is located on said second side, and an air cooling duct 67 is interconnecting said air cleaner 68 and said transmission 8. Said air cooling duct 67 is disposed in the width direction of said motorcycle and located above the engine 1. Said air cooling duct 67 extends across a space between a fuel tank 138 and an articles compartment 139.

The air cleaner 68 of the embodiment comprises a cleaner case for housing therein a filter element 68b. Said cleaner case comprises a case main part 68a for housing the filter element 68b. Said cleaner case further comprises a lid member 69a for covering the case main part 68a and serves as part of a vehicle body cover 69.

According to the embodiment, said cooling means comprises a cooling water circulation device for circulating cooling water between a radiator 117 and parts to be cooled, wherein said cooling water circulation device comprises a cooling water pump 110 placed on the second side of the body frame 141. A flywheel magneto 41 is located on said second side and the cooling water pump 110 is located behind said flywheel magneto 41 with regard to a longitudinal direction of the motorcycle. A clutch device 10 is located at said second side and said cooling water pump 110 is located between said clutch device 10 and said flywheel magneto 41 with regard to the longitudinal direction of the motorcycle.

Said engine 1 of the a motorcycle, especially a scooter type motorcycle, is mounted within a low-level foot board, the radiator 117 is placed at a front part of the foot board, and the radiator 117 and the cooling water pump 110 are interconnected for fluid communication through cooling water hoses routed under the foot board.

The transmission 8 of the motorcycle according to the embodiment is a V-belt type continuously variable transmission (CVT).

## Claims

1. Motorcycle, especially a scooter type motorcycle, with an engine (1) supported on a vehicle body frame (141) and a transmission (8) supported at a first side of said body frame (141) with regard to a width direction of said motorcycle, wherein a cooling means is at least partly located on a second side of the body frame (141), said second side is opposite to said first side with regard to the width direction of said motorcycle, **characterized in that** said cooling means comprises an air cooling means for supplying cooling air to the transmission (8), wherein an air cleaner (68) of said air cooling means is located on said second side, and an air cooling duct (67) is interconnecting said air cleaner (68) and said transmission (8).

2. Motorcycle according to claim 1, **characterized in that** said air cooling duct (67) is disposed in the width direction of said motorcycle and located above the engine (1).

3. Motorcycle according to claim 2, **characterized in that** said air cooling duct (67) extends across a space between a fuel tank (138) and an articles compartment (139).

4. Motorcycle according to one of the claims 1 to 3, **characterized in that** the air cleaner (68) comprises a cleaner case for housing therein a filter element (68b), said cleaner case comprising a case main part (68a) for housing the filter element (68b), and a lid member (69a) for covering the case main part (68a) and serving as part of a vehicle body cover (69).

5. Motorcycle according to one of the claims 1 to 4, **characterized in that** said cooling means comprises a cooling water circulation device for circulating cooling water between a radiator (117) and parts to be cooled, wherein said cooling water circulation device comprises a cooling water pump (110) placed on the second side of the body frame (141).

6. Motorcycle according to claim 5, **characterized in that** a flywheel magneto (41) is located on said second side and the cooling water pump (110) is located behind said flywheel magneto (41) with regard to a longitudinal direction of the motorcycle.

7. Motorcycle according to claim 6, **characterized in that** a clutch device (10) is located at said second side and said cooling water pump (110) is located between said clutch device (10) and said flywheel magneto (41) with regard to the longitudinal direction of the motorcycle.

8. Motorcycle according to one of the claims 5 to 7, **characterized in that** said engine (1) is mounted within a low-level foot board, the radiator (117) is placed at a front part of the foot board, and the radiator (117) and the cooling water pump (110) are interconnected for fluid communication through cooling water hoses routed under the foot board.

9. Motorcycle according to one of the claims 1 to 8, **characterized in that** said transmission (8) is a V-belt type continuously variable transmission (CVT).

## Patentansprüche

1. Motorrad, insbesondere ein Motorrad vom Typ Motorroller, mit einem Motor (1), der von einem Fahrzeugkarosserierahmen (141) getragen wird, und einem Getriebe (8), das an einer ersten Seite des Karosserierahmens (141) in Bezug auf eine Breitenrichtung des Motorrades getragen wird, wobei eine Kühleinrichtung wenigstens teilweise an einer zweiten Seite des Karrosserierahmens (141) angeordnet ist, die zweite Seite der ersten Seite in Bezug auf die Breitenrichtung des Motorrades gegenüber liegt, **dadurch gekennzeichnet, dass** die Kühleinrichtung eine Luftkühleinrichtung zum Zuführen von Kühlluft zu dem Getriebe (8) umfasst, wobei eine Luftreinigungseinrichtung (68) der Luftkühleinrichtung an der zweiten Seite angeordnet ist und eine Luftkühlleitung (67) die Luftreinigungseinrichtung (68) und das Getriebe (8) miteinander verbindet.

2. Motorrad nach Anspruch 1, **dadurch gekennzeichnet, dass** die Luftkühlleitung (67) in der Breitenrichtung des Motorrades angeordnet ist und sich über dem Motor (1) befindet.

3. Motorrad nach Anspruch 2, **dadurch gekennzeichnet, dass** sich die Luftkühlleitung (67) über einen Raum zwischen einem Kraftstofftank (138) und einem Aufbewahrungsfach (139) erstreckt.

4. Motorrad nach einem der Ansprüche 1 bis 3, **dadurch gekennzeichnet, dass** die Luftreinigungseinrichtung (68) ein Reinigungseinrichtungsgehäuse umfasst, das ein Filterelement (68b) aufnimmt, wobei das Reinigungseinrichtungsgehäuse ein Gehäuse-Hauptteil (68a) zum Aufnehmen des Filterelementes (68b) und ein Deckelement (69a) umfasst, das den Gehäuse-Hauptteil (68a) abdeckt und als Teil einer Fahrzeugkarosserie-Verkleidung (69) dient.

5. Mottorad nach einem der Ansprüche 1 bis 4, **dadurch gekennzeichnet, dass** die Kühleinrichtung eine Kühlwasser-Zirkulationsvorrichtung zum Zirkulieren von Kühlwasser zwischen einem Kühler (117) und zu kühlenden Teilen umfasst, wobei die Kühlwasser-Zirkulationsvorrichtung eine Kühlwasserpumpe (110) umfasst, die an der zweiten Seite des Karosserierahmens (141) angebracht ist.

6. Motorrad nach Anspruch 5, **dadurch gekennzeichnet, dass** sich ein Schwungradmagnetzünder (41) an der zweiten Seite befindet und sich die Kühlwasserpumpe (110) in Bezug auf eine Längsrichtung des Motorrades hinter dem Schwunglichtmagnetzünder (41) befindet.

7. Motorrad nach Anspruch 6, **dadurch gekennzeichnet, dass** sich eine Kupplungsvorrichtung (10) an der zweiten Seite befindet und sich die Kühlwasserpumpe (110) in Bezug auf die Längsrichtung des Motorrades zwischen der Kupplungsvorrichtung (10) und dem Schwunglichtmagnetzünder (41) befindet.

8. Motorrad nach einem der Ansprüche 5 bis 7, **dadurch gekennzeichnet, dass** der Motor (1) innerhalb eines niedrigen Fußbretts angebracht ist, der Kühler (117) an einem Vorderteil des Fußbretts angebracht ist und der Kühler (117) sowie die Kühlwasserpumpe (110) zur Fluidverbindung über Kühlwasserschläuche miteinander verbunden sind, die unter dem Fußbrett entlang geführt werden.

9. Motorrad nach einem der Ansprüche 1 bis 8, **dadurch gekennzeichnet, dass** das Getriebe (8) ein stufenloses Keilriemengetriebe (CVT) ist.

## Revendications

1. Motocyclette, en particulier une motocyclette de type scooter, ayant un moteur (1) supporté sur une ossature de caisse de véhicule (141) et une transmission (8) supportée au niveau d'un premier côté de ladite ossature de caisse (141) par rapport à une direction de largeur de ladite motocyclette, dans laquelle des moyens de refroidissement sont au moins partiellement situés sur un second côté de l'ossature de caisse (141), ledit second côté est opposé audit premier côté par rapport à la direction de largeur de ladite motocyclette, **caractérisée en ce que** les moyens de refroidissement comportent des moyens de refroidissement à air pour fournir de l'air de refroidissement à la transmission (8), dans laquelle un filtre à air (68) desdits moyens de refroidissement à air est situé sur ledit second côté, et un conduit de refroidissement à air (67) relie ledit filtre à air (68) et ladite transmission (8).

2. Motocyclette selon la revendication 1, **caractérisée en ce que** ledit conduit de refroidissement à air (67) est disposé dans la direction de largeur de ladite motocyclette, et est situé au-dessus du moteur (1).

3. Motocyclette selon la revendication 2, **caractérisée en ce que** ledit conduit de refroidissement à air (67) s'étend à travers un espace entre un réservoir de carburant (138) et un compartiment d'objets (139).

4. Motocyclette selon l'une quelconque des revendications 1 à 3, **caractérisée en ce que** le filtre à air (68) comporte un boîtier de filtre pour y recevoir un élément formant filtre (68b), ledit boîtier de filtre comportant une partie principale de boîtier (68a) pour recevoir l'élément formant filtre (68b), et un élément formant couvercle (69a) pour couvrir la partie principale de boîtier (68a) et servir en tant que partie d'un capot de carrosserie de véhicule (69).

5. Motocyclette selon l'une quelconque des revendications 1 à 4, **caractérisée en ce que** lesdits moyens de refroidissement comportent un dispositif de circulation de l'eau de refroidissement pour faire circuler de l'eau de refroidissement entre un radiateur (117) et des pièces à refroidir, dans laquelle ledit dispositif de circulation d'eau de refroidissement comporte une pompe à eau de refroidissement (110) mise en place sur le second côté de l'ossature de caisse (141).

6. Motocyclette selon la revendication 5, **caractérisée en ce qu'**un volant magnétique (41) est situé sur ledit second côté, et la pompe à eau de refroidissement (110) est située derrière ledit volant magnétique (41) par rapport à une direction longitudinale de la motocyclette.

7. Motocyclette selon la revendication 6,
**caractérisée en ce qu'**un dispositif formant embrayage (10) est situé au niveau dudit second côté, et ladite pompe à eau de refroidissement (110) est située entre ledit dispositif formant embrayage (10) et ledit volant magnétique (41) par rapport à la direction longitudinale de la motocyclette.

8. Motocyclette selon l'une quelconque des revendications 5 à 7, **caractérisée en ce que** ledit moteur (1) est monté dans une tôle de plancher de niveau bas, le radiateur (117) est mis en place au niveau d'une partie avant de la tôle de plancher, et le radiateur (117) et la pompe à eau de refroidissement (110) sont reliés pour une communication de fluide à travers des tuyaux d'eau de refroidissement acheminés sous la tôle de plancher.

9. Motocyclette selon l'une quelconque des revendications 1 à 8, **caractérisée en ce que** ladite transmission (8) est une transmission continûment variable de type courroie V (CVT).
